(19) Europäisches Patentamt
European Patent Office
Office européen des brevets

(11) **EP 3 933 477 A1**

(12) **EUROPEAN PATENT APPLICATION**

(43) Date of publication:
**05.01.2022 Bulletin 2022/01**

(51) Int Cl.:
**G02B 15/14** (2006.01)          **G02B 15/167** (2006.01)
**G02B 15/20** (2006.01)

(21) Application number: **21181605.3**

(22) Date of filing: **24.06.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2020 JP 2020111193**

(71) Applicant: **CANON KABUSHIKI KAISHA
OHTA-KU
Tokyo 146-8501 (JP)**

(72) Inventors:
• **OGAWA, Naotoshi**
  **Ohta-ku, 146-8501 (JP)**
• **YAMADA, Tomoya**
  **Ohta-ku, 146-8501 (JP)**
• **SAKAMOTO, Masaru**
  **Ohta-ku, 146-8501 (JP)**
• **INOMOTO, Yu**
  **Ohta-ku, 146-8501 (JP)**

(74) Representative: **Canon Europe Limited
European Intellectual Property Group
3 The Square, Stockley Park
Uxbridge UB11 1ET (GB)**

(54) **ZOOM LENS AND IMAGE PICKUP APPARATUS**

(57)    A zoom lens includes, in order from an object side, a positive first lens unit configured not to move for zooming, two or more intermediate lens units configured to move for zooming, and a positive rear lens unit. A distance between each pair of adjacent lens units changes for zooming. The first lens unit includes, in order from the object side, a negative first sub lens unit configured not to move for focusing, a positive second sub lens unit configured to move for focusing, and a positive third sub lens unit. Specific conditional expressions are satisfied with respect to: a focal length and a thickness of the first lens unit; focal lengths of the zoom lens at a wide angle end and a telephoto end; a backfocus; and a focal length of the first sub lens unit.

**FIG.1**

EP 3 933 477 A1

## Description

BACKGROUND OF THE INVENTION

Field of the Invention

The present invention relates to a zoom lens and an image pickup apparatus.

Description of the Related Art

Zoom lenses used for image pickup apparatuses, such as a television camera, a motion picture camera, a digital still camera, and a video camera, desirably are small-sized and lightweight for high operability, as well as have a wide angle of view, a high zoom ratio, and high optical performance. For use with image pickup elements (image sensors) supporting high resolution, such as 4K and 8K resolutions, high resolving power and low chromatic aberration from the center to the periphery of the screen are also demanded.

Among such zoom lenses, one zoom lens is known consisting of a first lens unit configured to have positive refractive power and not move for zooming, a plurality of moving lens units configured to move for zooming, and a rear lens unit configured to have positive refractive power and not move for zooming, in order from an object side to an image side (WO2017/158899). The first lens unit consists of a first sub lens unit having negative refractive power, a second sub lens unit having positive refractive power, and a third sub lens unit having positive refractive power. The second sub lens unit moves for focusing.

WO2017/158899 discusses a zoom lens having a half angle of view of approximately 50° at the wide angle end and a zoom ratio of approximately 12x. To increase the zoom ratio of the zoom lens, the on-axis light beam diameter at the telephoto end can be increased, the (effective) aperture of the first lens unit can be increased, and the zoom lens size can be increased.

SUMMARY OF THE INVENTION

An aspect of embodiments provides, for example, a zoom lens beneficial in a wide angle of view, a high zoom ratio, small size and weight, and high optical performance.

An aspect of embodiments provides a zoom lens including, in order from an object side to an image side, a first lens unit having a positive refractive power and configured not to move for zooming, two or more intermediate lens units configured to move for zooming, and a rear lens unit having a positive refractive power. A distance between each pair of adjacent lens units changes for zooming. The first lens unit includes, in order from the object side to the image side, a first sub lens unit having a negative refractive power and configured not to move for focusing, a second sub lens unit having a positive refractive power and configured to move for focusing, and a third sub lens unit having a positive refractive power. The zoom lens satisfies conditional expressions $1.5 \leq LD1/f1 \leq 3.0$, $13 \leq ft/fw \leq 28$, $0.070 \leq fw/BFw \leq 0.092$, and $-0.65 \leq f1a/LD1 \leq -0.30$, where $f1$ is a focal length of the first lens unit, $LD1$ is a thickness of the first lens unit on an optical axis, $fw$ is a focal length of the zoom lens at a wide angle end, $ft$ is a focal length of the zoom lens at a telephoto end, $BFw$ is a length, on the optical axis, from an image-side surface of a most image-side lens having a finite focal length in the zoom lens to an image plane, and $f1a$ is a focal length of the first sub lens unit.

Further features of the present invention will become apparent from the following description of exemplary embodiments with reference to the attached drawings.

BRIEF DESCRIPTION OF THE DRAWINGS

Fig. 1 is a sectional view of a zoom lens according to a first example, at a wide angle end and an infinity focusing state.
Fig. 2A is a diagram illustrating aberrations of the zoom lens according to the first example, at the wide angle end and the infinity focusing state.
Fig. 2B is a diagram illustrating aberrations of the zoom lens according to the first example, at an intermediate zooming state and the infinity focusing state.
Fig. 2C is a diagram illustrating aberrations of the zoom lens according to the first example, at a telephoto end and the infinity focusing state.
Fig. 3 is a sectional view of a zoom lens according to a second example, at a wide angle end and an infinity focusing state.
Fig. 4A is a diagram illustrating aberrations of the zoom lens according to the second example, at the wide angle end and the infinity focusing state.

Fig. 4B is a diagram illustrating aberrations of the zoom lens according to the second example, at an intermediate zooming state and the infinity focusing state.

Fig. 4C is a diagram illustrating aberrations of the zoom lens according to the second example, at a telephoto end and the infinity focusing state.

Fig. 5 is a sectional view of a zoom lens according to a third example, at a wide angle end and an infinity focusing state.

Fig. 6A is a diagram illustrating aberrations of the zoom lens according to the third example, at the wide angle end and the infinity focusing state.

Fig. 6B is a diagram illustrating aberrations of the zoom lens according to the third example, at an intermediate zooming state and the infinity focusing state.

Fig. 6C is a diagram illustrating aberrations of the zoom lens according to the third example, at a telephoto end and the infinity focusing state.

Fig. 7 is a sectional view of a zoom lens according to a fourth example, at a wide angle end and an infinity focusing state.

Fig. 8A is a diagram illustrating aberrations of the zoom lens according to the fourth example, at the wide angle end and the infinity focusing state.

Fig. 8B is a diagram illustrating aberrations of the zoom lens according to the fourth example, at an intermediate zooming state and the infinity focusing state.

Fig. 8C is a diagram illustrating aberrations of the zoom lens according to the fourth example, at a telephoto end and the infinity focusing state.

Fig. 9 is a sectional view of a zoom lens according to a fifth example, at a wide angle end and an infinity focusing state.

Fig. 10A is a diagram illustrating aberrations of the zoom lens according to the fifth example, at the wide angle end and the infinity focusing state.

Fig. 10B is a diagram illustrating aberrations of the zoom lens according to the fifth example, at an intermediate zooming state and the infinity focusing state.

Fig. 10C is a diagram illustrating aberrations of the zoom lens according to the fifth example, at a telephoto end and the infinity focusing state.

Fig. 11 is a sectional view of a zoom lens according to a sixth example, at a wide angle end and an infinity focusing state.

Fig. 12A is a diagram illustrating aberrations of the zoom lens according to the sixth example, at the wide angle end and the infinity focusing state.

Fig. 12B is a diagram illustrating aberrations of the zoom lens according to the sixth example, at an intermediate zooming state and the infinity focusing state.

Fig. 12C is a diagram illustrating aberrations of the zoom lens according to the sixth example, at a telephoto end and the infinity focusing state.

Fig. 13 is a sectional view of a zoom lens according to a seventh example, at a wide angle end and an infinity focusing state.

Fig. 14A is a diagram illustrating aberrations of the zoom lens according to the seventh example, at the wide angle end and the infinity focusing state.

Fig. 14B is a diagram illustrating aberrations of the zoom lens according to the seventh example, at an intermediate zooming state and the infinity focusing state.

Fig. 14C is a diagram illustrating aberrations of the zoom lens according to the seventh example, at a telephoto end and the infinity focusing state.

Fig. 15 is a sectional view of a zoom lens according to an eighth example, at a wide angle end and an infinity focusing state.

Fig. 16A is a diagram illustrating aberrations of the zoom lens according to the eighth example, at the wide angle end and the infinity focusing state.

Fig. 16B is a diagram illustrating aberrations of the zoom lens according to the eighth example, at an intermediate zooming state and the infinity focusing state.

Fig. 16C is a diagram illustrating aberrations of the zoom lens according to the eighth example, at a telephoto end and the infinity focusing state.

Fig. 17 is a diagram illustrating a configuration example of an image pickup apparatus.

Fig. 18 is a schematic diagram illustrating a relationship between the Abbe numbers $\nu$ and partial dispersion ratios $\theta$ of optical materials.

## DESCRIPTION OF THE EMBODIMENTS

An exemplary embodiment of the present invention will be described below with reference to the attached drawings. Throughout the diagrams for describing the exemplary embodiment, similar members are denoted by the same reference numerals in principle (unless otherwise specified) and a redundant description thereof will be omitted. Each of the embodiments of the present invention described below can be implemented solely or as a combination of a plurality of the embodiments or features thereof where necessary or where the combination of elements or features from individual embodiments in a single embodiment is beneficial.

[Exemplary Embodiment]

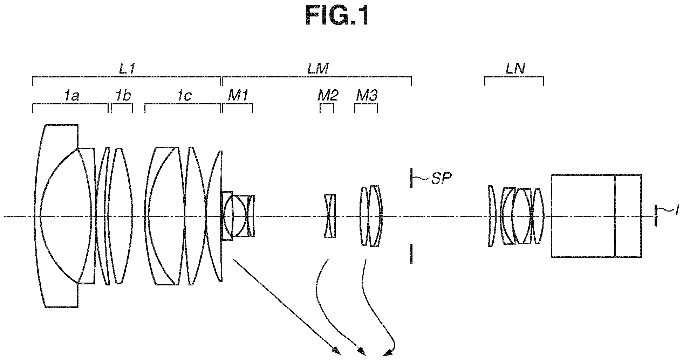

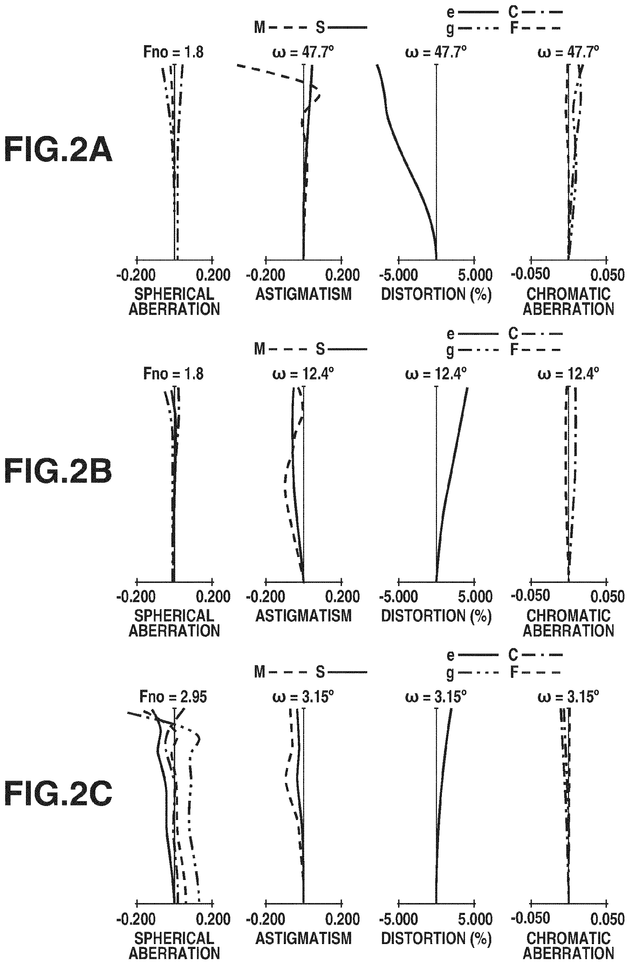

Fig. 1 is a sectional view of a zoom lens according to a first example described below, at a wide angle end and an infinity focusing state. The first example corresponds to a first numerical example described below. Figs. 2A, 2B, and 2C are diagrams illustrating aberrations according to the first numerical example at the wide angle end, an intermediate position, and a telephoto end, respectively (see the first numerical example for respective focal lengths), with the zoom lens at the infinity focusing state. In the diagrams illustrating the aberrations, a straight line, a double-dotted dashed line, a dot-dashed line, and a broken line representing spherical aberration correspond to e-line (wavelength: 546.1 nm), g-line (wavelength: 435.8 nm), C-line (wavelength: 656.3 nm), and F-line (wavelength: 486.1 nm), respectively. A broken line and a solid line representing astigmatism correspond to a meridional image plane and a sagittal image plane, respectively. In the diagrams illustrating distortion, a line corresponds to e-line. In the diagrams illustrating chromatic aberration of magnification, a solid line, a double-dotted dashed line, a dot-dashed line, and a broken line correspond to e-line, g-line, C-line, and F-line, respectively. Fno represents F-number, and ω a half angle of view. The spherical aberration is plotted with the full scale of the horizontal axis as $\pm0.200$ mm. The astigmatism is plotted with the full scale of the horizontal axis as $\pm0.200$ mm. The distortion is plotted with the full scale of the horizontal axis as $\pm5.000\%$. The chromatic aberration of magnification is plotted with the full scale of the horizontal axis as $\pm0.050$ mm.

The components of the zoom lens will be described in order from an object side to an image side with reference to Fig. 1. A first lens unit L1 has positive refractive power and does not move for zooming. A first sub lens unit 1a in the first lens unit L1 does not move for focusing. A second sub lens unit 1b in the first lens unit L1 moves to the image side for focusing objects ranging from infinite to closest. A third sub lens unit 1c in the first lens unit L1 does not move for focusing. Intermediate lens units LM consists of two or more lens units and move for zooming. The intermediate lens units LM consist of a first intermediate lens unit M1 having negative refractive power, a second intermediate lens unit M2 having negative refractive power, and a third intermediate lens unit M3 having positive refractive power. The first intermediate lens unit M1 has negative refractive power, and moves monotonically on an optical axis to the image side for the sake of zooming from the wide angle end to the telephoto end. The second intermediate lens unit M2 has negative refractive power, and moves on the optical axis to trace a locus convex to the object side for zooming from the wide angle end to the telephoto end. The third intermediate lens unit M3 has positive refractive power, and moves on the optical axis non- monotonically as illustrated in the diagram for zooming from the wide angle end to the telephoto end. An aperture stop SP does not move for zooming. A rear lens unit LN has positive refractive power and does not move for zooming. The zoom lens has an image plane I where an image is formed, and an image pickup element picks up the image.

The zoom lens according to the present exemplary embodiment consists of, in order from the object side to the image side, the first lens unit L1 that has positive refractive power and does not move for zooming, the two or more intermediate lens units LM that move for zooming, and the rear lens unit LN that has positive refractive power. The zoom lens is intended for a camera having a diagonal image size of 2Y.

In the zoom lens, distances between adjoining ones of the lens units all change for zooming.

The first lens unit L1 consists of, in order from the object side to the image side, the first sub lens unit 1a that has negative refractive power and does not move for focusing, the second sub lens unit 1b that has positive refractive power and moves for focusing, and the third sub lens unit 1c that has positive refractive power.

The zoom lens satisfies the following conditional expressions:

$$1.5 \leq LD1/f1 \leq 3.0, \quad (1)$$

$$46° \leq \omega \leq 50°, \text{ and} \quad (2)$$

$$13 \leq ft/fw \leq 28, \quad (3)$$

where f1 is the focal length of the first lens unit L1, LD1 is the thickness of the first lens unit on the optical axis, ω is the half angle of view of the zoom lens at the wide angle end, fw is the focal length of the zoom lens at the wide angle end, and ft is the focal length of the zoom lens at the telephoto end.

Here, the half angle of view ω is defined by the following equation:

$$\omega = \arctan (Y/fw).$$

The technical meanings of the conditional expressions (1) to (3) will now be described. The conditional expression (1) expresses a condition for a high zoom ratio, small size, light weight, and high optical performance across the entire focusing range. If the upper limit value of the conditional expression (1) is not satisfied, the thickness of the first lens unit L1 on the optical axis is excessively large, and thus the first lens unit L1 is oversized. Alternatively, the focal length of the first lens unit L1 is excessively short, and thus aberration variations in an infinity-focused state at the telephoto end are excessively large. If the lower limit value of the conditional expression (1) is not satisfied, the thickness of the first lens unit L1 on the optical axis is excessively small to include as many lenses as used to confine aberration variations in the infinity-focused state at the telephoto end within allowable ranges. Alternatively, the focal length of the first lens unit L1 is excessively large. This increases the amount of movement of at least one of the two or more intermediate lens units LM for zooming, and the zoom lens is oversized.

The conditional expression (2) expresses a condition for obtaining a zoom lens advantageous in terms of a wide angle of view, a high zoom ratio, small size, light weight, and high optical performance. If the upper limit value of the conditional expression (2) is not satisfied, a zoom lens advantageous in terms of small size, light weight, and high optical performance is difficult to obtain. If the lower limit value of the conditional expression (2) is not satisfied, a zoom lens advantageous in terms of a wide angle of view, small size, and light weight is not obtained.

The conditional expression (3) expresses a condition for obtaining a zoom lens advantageous in terms of a high zoom ratio, small size, and light weight. If the lower limit value of the conditional expression (3) is not satisfied, a zoom lens having a high zoom ratio is difficult to obtain. If the upper limit value of the conditional expression (3) is not satisfied, a zoom lens having a wide angle of view, small size, light weight, and high optical performance is difficult to obtain.

The configuration of the first lens unit L1 is not limited to that consisting of the foregoing three sub lens units. For example, a plurality of sub lens units may move for focusing. Other sub lens units may also be included.

The zoom lens according to the present exemplary embodiment can further satisfy the following conditional expressions:

$$-1.00 \le f1a/LD1 \le -0.30, \text{ and } \quad (4)$$

$$0.40 \le f1c/LD1 \le 1.0, \quad (5)$$

where f1a is the focal length of the first sub lens unit 1a, and f1c is the focal length of the third sub lens unit 1c. The conditional expression (4) expresses a condition for the first lens unit L1 to have a small size. If the upper limit value of the conditional expression (4) is not satisfied, the focal length of the first sub lens unit 1a has an excessively small absolute value, and thus the on-axis light beam diameter at the telephoto end is excessively large. This makes the diameter of the third sub lens unit 1c excessively large, and makes the first lens unit L1 large in size. If the lower limit value of the conditional expression (4) is not satisfied, the focal length of the first sub lens unit 1a has too large an absolute value, and thus the incident pupil of the zoom lens is located excessively far on the object side. This makes the diameter of the first sub lens unit 1a excessively large, and makes the first lens unit L1 large in size.

The conditional expression (5) expresses a condition for small size and high optical performance at the telephoto end. If the upper limit value of the conditional expression (5) is not satisfied, the third sub lens unit 1c has excessively large a focal length. This makes the focal length of the first lens unit L1 excessively large and the lateral magnification of at least one of the two or more intermediate lens units LM excessively low. The amount of movement of the at least one intermediate lens unit for zooming is thus excessively large, and a zoom lens advantageous in terms of small size and light weight is difficult to obtain. If the lower limit value of the conditional expression (5) is not satisfied, the focal length of the third sub lens unit 1c is excessively small and aberrations at the telephoto end are excessively large.

The zoom lens according to the present exemplary embodiment can further satisfy the following conditional expressions:

$$0.25 \le LD1/TL \le 0.35, \text{ and } \quad (6)$$

$$0.10 \le f1/TL \le 0.20, \quad (7)$$

where TL is the distance from the most object-side lens surface to the image plane on the optical axis. The conditional expression (6) expresses a condition for small size and a high zoom ratio. If the upper limit value of the conditional expression (6) is not satisfied, the first lens unit L1 having the largest diameter occupies excessively large a proportion of the zoom lens, and thus the zoom lens is increased in size. If the lower limit value of the conditional expression (6) is not satisfied, the first lens unit L1 occupies excessively small a proportion of the zoom lens to include as many lenses as used to confine aberration variations during focusing within allowable ranges.

The conditional expression (7) expresses a condition for obtaining small size and confining aberration variations during focusing within the allowable ranges. If the upper limit value of the conditional expression (7) is not satisfied, the first lens unit L1 has excessively large a focal length. This makes the lateral magnification of at least one of the two or more intermediate lens units LM excessively low, the amount of movement of the at least one intermediate lens unit LM for zooming excessively large, and the zoom lens is large in size. If the lower limit value of the conditional expression (7) is not satisfied, the first lens unit L1 has excessively small a focal length to confine the aberration variations in the infinity focused state at the telephoto end within the allowable ranges.

The zoom lens according to the present exemplary embodiment can further satisfy the following conditional expression:

$$1.75 \leq nd1n < 2.00, \quad (8)$$

where nd1n is an average refractive index of the negative lenses in the first lens unit L1 on d-line (wavelength: 587.6 nm). The conditional expression (8) expresses a condition for confining aberrations within allowable ranges and making the first lens unit L1 lightweight. If the upper limit value of the conditional expression (8) is not satisfied, the first lens unit L1 is difficult to make lightweight since high refractive index materials tend to have high specific gravity. If the lower limit value of the conditional expression (8) is not satisfied, the average refractive index is excessively low to confine aberrations within the allowable ranges.

The zoom lens according to the present exemplary embodiment can further satisfy the following conditional expression:

$$1.2 \leq \beta1b \leq 4.0, \quad (9)$$

where $\beta1b$ is the lateral magnification of the second sub lens unit 1b at the wide angle end in the infinity-focused state. The conditional expression (9) expresses a condition for small size and high optical performance over the entire focusing range. If the upper limit value of the conditional expression (9) is not satisfied, the refractive power of the second sub lens unit 1b is excessively high, and aberration variations in the infinity-focused state at the telephoto end are excessively large. If the lower limit value of the conditional expression (9) is not satisfied, the amount of movement of the second sub lens unit 1b for focusing is excessively large. This makes the thickness of the first lens unit L1 on the optical axis excessively large, and makes the first lens unit L1 large in size. To obtain a small-sized zoom lens, the second sub lens unit 1b can include a positive lens having at least one aspheric surface. The zoom lens according to the present exemplary embodiment more desirably satisfies the following conditional expression:

$$2.0 \leq \beta1b \leq 4.0. \quad (9')$$

In the zoom lens according to the present exemplary embodiment, the first sub lens unit 1a includes a lens 1ap having positive refractive power, and the third sub lens unit 1c includes a lens 1cn having negative refractive power. The zoom lens desirably satisfies the following conditional expressions:

$$17.0 \leq vd1ap \leq 35.0, \quad (10)$$

$$20.0 \leq vd1cn \leq 50.0, \text{ and} \quad (11)$$

$$5.0 \leq vd1cn - vd1ap \leq 20.0, \quad (12)$$

where vd1ap is the Abbe number of the lens 1ap on d-line, and vd1cn is the Abbe number of the lens 1cn on d-line.

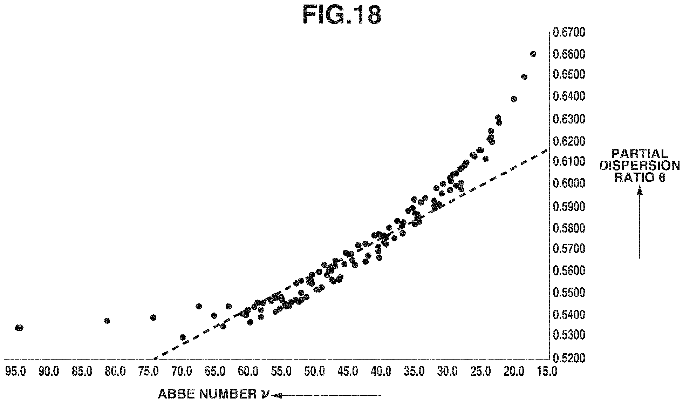

The conditional expressions (10) to (12) express conditions for confining the axial chromatic aberration at the telephoto end and variations in the axial chromatic aberration over the entire focusing range within allowable ranges. Fig. 18 is a schematic diagram illustrating a relationship between the Abbe numbers ν and partial dispersion ratios θ of optical materials. In Fig. 18, the lower the Abbe number ν (the higher the dispersion) of an optical material, the more manifest the anomalous dispersion property, i.e., the discrepancy between the partial dispersion ratio θ and the straight line illustrated in the broken line. If the upper limit value of the conditional expression (10) is not satisfied, variations in the secondary spectrum of the axial color aberration over the entire focusing range are difficult to be confined within an allowable range. If the lower limit value of the conditional expression (10) is not satisfied, the anomalous dispersion property is excessively high to confine the secondary spectrum of the axial color aberration at the telephoto end within an allowable range.

If the upper limit value of the conditional expression (11) is not satisfied, the axial chromatic aberration at the telephoto end is difficult to be confined within the allowable range. If the lower limit value of the conditional expression (11) is not satisfied, the secondary spectrum of the axial chromatic aberration at the telephoto end is difficult to be confined within the allowable range.

If the upper or lower limit value of the conditional expression (12) is not satisfied, the axial chromatic aberration at the telephoto end is difficult to confine within allowable range.

In the zoom lens according to the present exemplary embodiment, the two or more intermediate lens units LM can include a lens unit having negative refractive power (negative intermediate lens unit) and satisfying the following conditional expression:

$$0.70 \le m/f1 \le 2.0, \quad (13)$$

where m is the amount of movement of the negative intermediate lens unit from the wide angle end to the telephoto end. The conditional expression (13) expresses a condition for obtaining small size and confining aberration variations during zooming within allowable ranges. If the upper limit value of the conditional expression (13) is not satisfied, the amount of movement of the negative intermediate lens unit for zooming is excessively large. This makes the thickness of the two or more intermediate lens units LM excessively large, and the incident pupil of the zoom lens is located excessively far on the object side. The first lens unit L1 thus has a large diameter, and the zoom lens a large size. If the lower limit value of the conditional expression (13) is not satisfied, the amount of movement of the negative intermediate lens unit is excessively small, and the refractive power of the negative intermediate lens unit excessively high. The aberration variations during zooming are therefore difficult to be confined within the allowable ranges.

In the zoom lens according to the present exemplary embodiment, the first lens unit L1 may include a lens G1 having negative refractive power as the most object-side lens, and desirably satisfies the following conditional expression:

$$-2.2 \le fG1/f1 \le -0.8, \quad (14)$$

where fG1 is the focal length of the lens G1. The conditional expression (14) expresses a condition for making the first lens unit L1 small in size. If the upper limit value of the conditional expression (14) is not satisfied, the focal length of the lens G1 has excessively small an absolute value. This increases the on-axis light beam diameter at the telephoto end, and thereby the first lens unit L1 has a large size due to an increase in the diameter of the third sub lens unit 1c. If the lower limit value of the conditional expression (14) is not satisfied, the focal length of the lens G1 is excessively large, and the incident pupil of the zoom lens is located excessively far on the object side. This makes the diameter of the first sub lens unit 1a excessively large, and makes the first lens unit L1 large in size.

The zoom lens according to the present exemplary embodiment further desirably satisfies the following conditional expressions:

$$0.30 \le LD1a/LD1 \le 0.50, \quad (15)$$

$$0.05 \le LD1b/LD1 \le 0.20, \quad (16)$$

$$0.30 \le LD1c/LD1 \le 0.50, \text{ and} \quad (17)$$

$$0.05 \leq \text{D1b/LD1} \leq 0.20, \quad (18)$$

where LDIa is the thickness of the first sub lens unit 1a on the optical axis, LDIb is the thickness of the second sub lens unit 1b on the optical axis, LDIc is the thickness of the third sub lens unit 1c on the optical axis, and D1b is the distance between the second and third sub lens units 1b and 1c in the infinity-focused state. The conditional expressions (15) to (18) each express a condition for obtaining small size and confining aberration variations in the infinity-focused state within allowable ranges.

Instead of the conditional expression (2) related to the half angle of view ω, the zoom lens according to the present exemplary embodiment desirably satisfies the following conditional expression:

$$0.070 \leq \text{fw/BFw} \leq 0.110, \quad (19)$$

where BFw is the length (distance), on the optical path, from the image-side surface of the most image-side lens having a finite focal length in the zoom lens to the image plane. The conditional expression (19) defines a condition for obtaining a small-sized lightweight zoom lens having a wide angle of view. If the upper limit value of the conditional expression (19) is not satisfied, the focal length at the wide angle end is excessively long compared to the back focus, and a zoom lens having a wide angle of view is difficult to be obtained. If the lower limit value of the conditional expression (19) is not satisfied, the back focus is excessively long compared to the focal length at the wide angle end, and a small-sized lightweight zoom lens is difficult to be obtained.

The conditional expressions (1) to (19) are desirably modified into the following conditional expressions (1a) to (19a), respectively:

$$1.7 \leq \text{LD1/f1} \leq 2.82, \quad (1a)$$

$$46° \leq \omega \leq 49°, \quad (2a)$$

$$18 \leq \text{ft/fw} \leq 22, \quad (3a)$$

$$-0.70 \leq \text{f1a/LD1} \leq -0.35, \quad (4a)$$

$$0.50 \leq \text{f1c/LD1} \leq 0.80, \quad (5a)$$

$$0.28 \leq \text{LD1/TL} \leq 0.32, \quad (6a)$$

$$0.10 \leq \text{F1/TL} \leq 0.16, \quad (7a)$$

$$1.79 \leq \text{nd1n} \leq 1.95, \quad (8a)$$

$$1.5 \leq \beta1b \leq 3.5, \quad (9a)$$

$$17.0 \leq \text{vd1ap} \leq 29.0, \quad (10a)$$

$$23.0 \leq \text{vd1cn} \leq 41.0, \quad (11a)$$

$$5.0 \le vd1cn - vd1ap \le 15.0, \quad (12a)$$

$$0.90 \le m/f1 \le 1.5, \quad (13a)$$

$$-1.8 \le fG1/f1 \le -1.0, \quad (14a)$$

$$0.30 \le LD1a/LD1 \le 0.40, \quad (15a)$$

$$0.05 \le LD1b/LD1 < 0.15, \quad (16a)$$

$$0.30 \le LD1c/LD1 \le 0.45, \quad (17a)$$

$$0.05 \le D1b/LD1 \le 0.15, \text{ and} \quad (18a)$$

$$0.080 \le fw/BFw \le 0.095. \quad (19a)$$

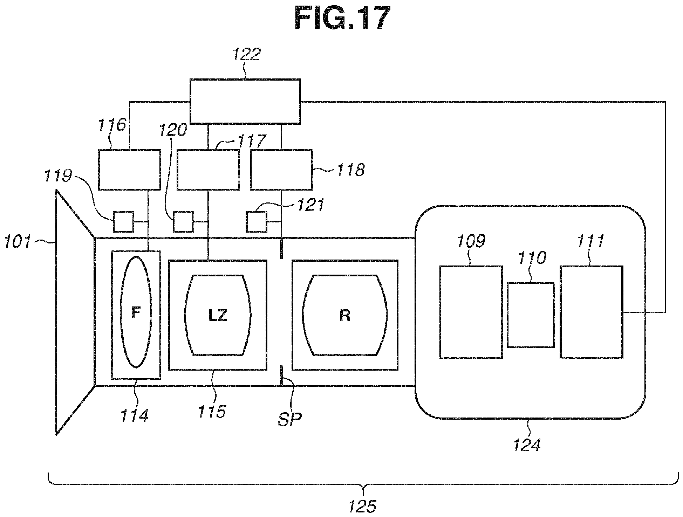

Fig. 17 is a diagram illustrating a configuration example of an image pickup apparatus. In Fig. 17, a zoom lens 101 is any one of zoom lenses according to the first example to an eighth example. The zoom lens 101 is detachably mountable on a camera (image pickup apparatus) main body 124. An image pickup apparatus 125 is constituted by mounting the zoom lens 101 on the camera main body 124. The zoom lens 101 includes a first lens unit F, two or more intermediate lens units LZ, and a rear lens unit R for image formation. The first lens unit F consists of a second sub lens unit 1b that moves on the optical axis for focusing, and a first sub lens unit 1a and a third sub lens unit 1c that do not move for focusing.

The two or more intermediate lens units LZ move on the optical axis for zooming. Driving mechanisms 114 and 115 drive the second sub lens unit 1b and the two or more intermediate lens units LZ, respectively, in the optical axis direction. The driving mechanisms 114 and 115 can include a helicoid and/or a cam. Motors (driving units) 116, 117, and 118 are intended to drive the driving mechanisms 114 and 115 and an aperture stop SP, respectively. Detection units 119, 120, and 121 are intended to detect the position of the second sub lens unit 1b on the optical axis, the positions of the two or more intermediate lens units LZ on the optical axis, and the aperture diameter of the aperture stop SP, respectively. The detection units 119 to 121 can include an encoder, a potentiometer, and/or a photo sensor. The camera main body 124 includes a glass block 109 including an optical filter, and an image pickup element (photoelectric conversion element) 110 for capturing an object image formed by the zoom lens 101. The image pickup element 110 can include a charge-coupled device (CCD) or complementary metal-oxide-semiconductor (CMOS) sensor. A central processing unit (CPU) 111 serves as a processor (controller) in the camera main body 124. A CPU 122 serves as a processing unit (control unit) in the zoom lens 101. The zoom lens 101 according to the present exemplary embodiment is mounted on the camera main body 124 in such a manner, whereby the useful image pickup apparatus 125 including the zoom lens 101 having the advantageous effects described above or to be described below can be provided.

The first to eighth examples of the zoom lens 101 according to the present exemplary embodiment and the first to an eighth numerical examples corresponding thereto will now be described in detail.

[First Example]

The lens units and the sub lens units according to the first example (first numerical example) are configured as described above with reference to Fig. 1. In Fig. 1, the first lens unit L1 has first to fifteenth surfaces. The first sub lens unit 1a includes the first to sixth surfaces, and consists of two negative lenses and one positive lens. The second sub lens unit 1b includes the seventh and eighth surfaces, and consists of one positive lens having an aspheric surface on the image side. The third sub lens unit 1c includes the ninth to fifteenth surface, and consists of three positive lenses and one negative lens.

The two or more intermediate lens units LM have sixteenth to thirtieth surfaces. The first intermediate lens unit M1 includes the sixteenth to twenty-second surfaces, and consists of three negative lenses and one positive lens. The second intermediate lens unit M2 includes the twenty-third to twenty-fifth surfaces, and consists of one negative lens and one positive lens. The third intermediate lens unit M3 includes the twenty-sixth to thirtieth surfaces, and consists of one negative lens and two positive lenses. The aperture stop SP has a thirty-first surface. The rear lens unit LN has thirty-second to forty-first surfaces, and consists of two negative lenses and four positive lenses.

As described above, Figs. 2A to 2C are diagrams illustrating the aberrations according to the first example (first numerical example).

The values related to the conditional expressions (1) to (19) according to the present example are listed in Table 1. The values of the variables included in the conditional expressions (1) to (19) are listed in Table 2. The present example can provide a zoom lens that satisfies all the conditional expressions (1) to (19) and is advantageous in terms of a wide angle, a high zoom ratio, small size, light weight, and high optical performance. The zoom lens according to the present example may satisfy the conditional expressions (1) to (3) or the conditional expressions (1), (3), and (19). The conditional expressions (4) to (19) or the conditional expressions (2) and (4) to (18) do not necessarily need to be satisfied in the respective cases. If at least one of the conditional expressions (4) to (19) is satisfied in addition to the conditional expressions (1) to (3), more pronounced effects can be obtained than if not. If at least one of the conditional expressions (2) and (4) to (18) is satisfied in addition to the conditional expressions (1), (3), and (19), more pronounced effects can be obtained than if not.

[Second Example]

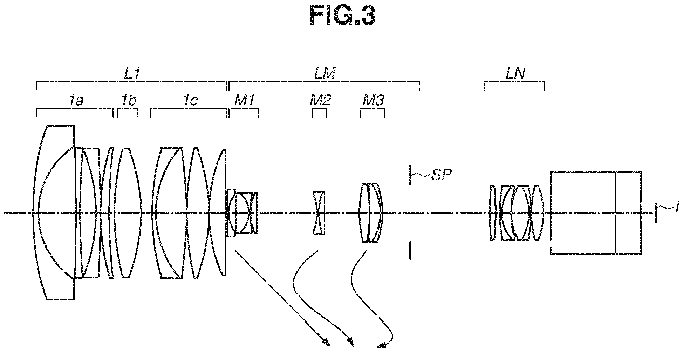

Fig. 3 is a sectional view of a zoom lens according to the second example, at the wide angle end and an infinity focusing state. Referring to Fig. 3, the components of the zoom lens will be described in order from the object side to the image side. A first lens unit L1 has positive refractive power and does not move for zooming. A first sub lens unit 1a in the first lens unit L1 does not move for focusing. A second sub lens unit 1b in the first lens unit L1 moves to the image side for focusing from an infinite object to a closest object. A third sub lens unit 1c in the first lens unit L1 does not move for focusing. Two or more intermediate lens units LM move for zooming. The two or more intermediate lens units LM consist of a first intermediate lens unit M1 having negative refractive power, a second intermediate lens unit M2 having negative refractive power, and a third intermediate lens unit M3 having positive refractive power. The first intermediate lens unit M1 moves monotonically on the optical axis to the image side for zooming from the wide angle end to the telephoto end. For that zooming, the second intermediate lens unit M2 initially moves on the optical axis to the object side and then to the image side (to the image side after movement to the object side, i.e., to trace a locus convex to the object side). The third intermediate lens unit M3 moves on the optical axis (for example, non-monotonically as illustrated in Fig. 3) for the zooming. An aperture stop SP does not move for zooming. A rear lens unit LN has positive refractive power and does not move for zooming.

The first lens unit L1 has first to seventeenth surfaces. The first sub lens unit 1a includes the first to eighth surfaces, and consists of three negative lenses and one positive lens. The second sub lens unit 1b includes the ninth and tenth surfaces, and consists of a positive lens having an aspheric surface on the image side. The third sub lens unit 1c includes the eleventh to seventeenth surfaces, and consists of three positive lenses and one negative lens.

The two or more intermediate lens units LM have eighteenth to thirty-second surfaces. The first intermediate lens unit M1 includes the eighteenth to twenty-fourth surfaces, and consists of three negative lenses and one positive lens. The second intermediate lens unit M2 includes the twenty-fifth to twenty-seventh surfaces, and consists of one negative lens and one positive lens. The third intermediate lens unit M3 includes the twenty-eighth to thirty-second surfaces, and consists of one negative lens and two positive lenses. The aperture stop SP has a thirty-third surface. The rear lens unit LN has thirty-fourth to forty-third surfaces, and consists of two negative lenses and four positive lenses.

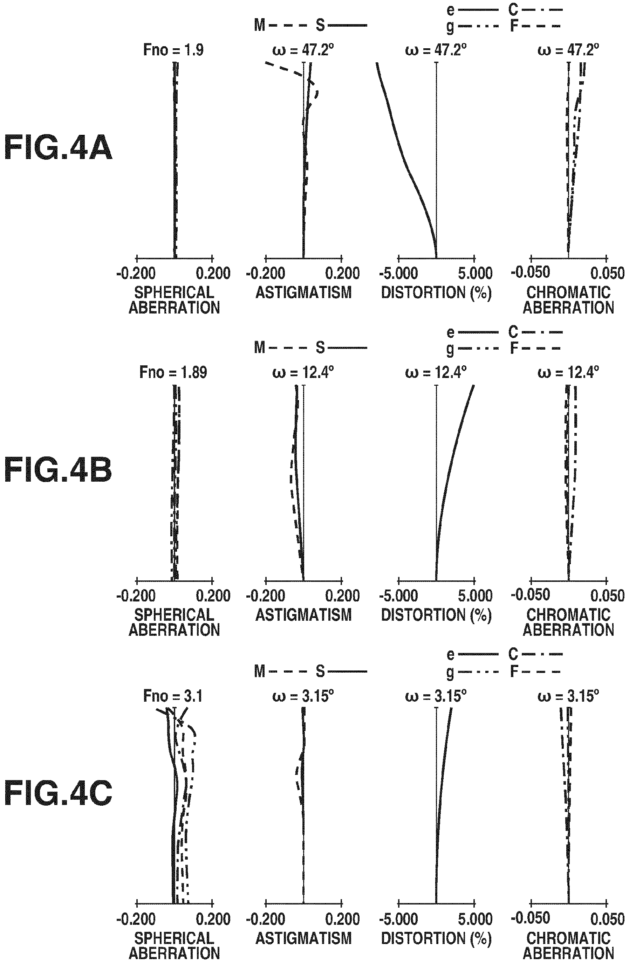

Figs. 4A, 4B, and 4C are diagrams illustrating aberrations in an infinity-focused state at the wide angle end, an intermediate position, and the telephoto end, respectively (see a second numerical example for respective focal lengths). The legends are the same as those described with reference to Figs. 2A to 2C.

The values related to the conditional expressions (1) to (19) according to the present example are listed in Table 1. The values of the variables included in the conditional expressions (1) to (19) are listed in Table 2. The present example can provide a zoom lens that satisfies all the conditional expressions (1) to (19) and is advantageous in terms of a wide angle, a high zoom ratio, small size, light weight, and high optical performance. The zoom lens according to the present example may satisfy the conditional expressions (1) to (3) or the conditional expressions (1), (3), and (19). The conditional expressions (4) to (19) or the conditional expressions (2) and (4) to (18) do not necessarily need to be satisfied in the respective cases. If at least one of the conditional expressions (4) to (19) is satisfied in addition to the conditional expressions (1) to (3), more pronounced effects can be obtained than if not. If at least one of the conditional expressions (2) and (4) to (18) is satisfied in addition to the conditional expressions (1), (3), and (19), more pronounced effects can be obtained than if not.

[Third Example]

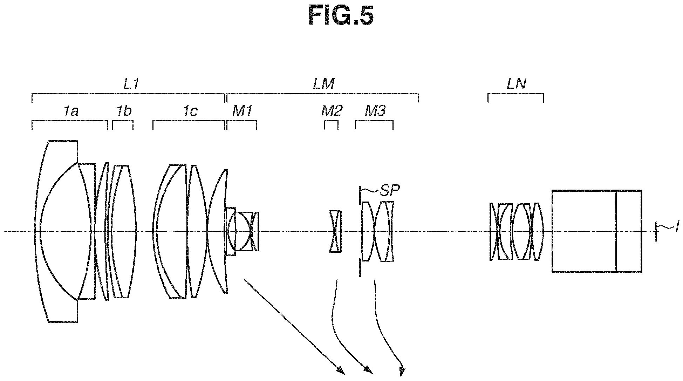

Fig. 5 is a sectional view of a zoom lens according to the third example, at the wide angle end and an infinity focusing state. Referring to Fig. 5, the components of the zoom lens will be described in order from the object side to the image side. A first lens unit L1 does not move for zooming. A first sub lens unit 1a in the first lens unit L1 does not move for focusing. A second sub lens unit 1b in the first lens unit L1 moves to the image side for focusing from an infinite object to a closest object. A third sub lens unit 1c in the first lens unit L1 does not move for focusing. Two or more intermediate lens units LM move for zooming. The two or more intermediate lens units LM consist of a first intermediate lens unit M1 having negative refractive power, a second intermediate lens unit M2 having negative refractive power, and a third intermediate lens unit M3 having positive refractive power. The first intermediate lens unit M1 moves monotonically on the optical axis to the image side for zooming from the wide angle end to the telephoto end. The second intermediate lens unit M2 initially moves on the optical axis to the object side and then to the image side for the zooming. The third intermediate lens unit M3 moves on the optical axis (for example, non-monotonically as illustrated in Fig. 5) for the zooming. An aperture stop SP is located at the object-side end of the third intermediate lens unit M3, and moves with the third intermediate lens unit M3 as one. A rear lens unit LN has positive refractive power and does not move for zooming.

The first lens unit L1 has first to sixteenth surfaces. The first sub lens unit 1a includes the first to sixth surfaces, and consists of two negative lenses and one positive lens. The second sub lens unit 1b includes the seventh to ninth surfaces, and consists of a cemented lens formed by cementing one negative lens with one positive lens having an aspheric surface on the image side. The third sub lens unit 1c includes the tenth to sixteenth surfaces, and consists of three positive lenses and one negative lens.

The two or more intermediate lens units LM have seventeenth to thirty-second surfaces. The first intermediate lens unit M1 includes the seventeenth to twenty-third surfaces, and consists of three negative lenses and one positive lens. The second intermediate lens unit M2 includes the twenty-fourth to twenty-sixth surfaces, and consists of one negative lens and one positive lens. The aperture stop SP has a twenty-seventh surface. The third intermediate lens unit M3 includes the twenty-seventh surface to a thirty-second surface, and consists of the aperture stop SP, one negative lens, and two positive lenses. The rear lens unit LN has thirty-third to forty-second surfaces, and consists of two negative lenses and four positive lenses.

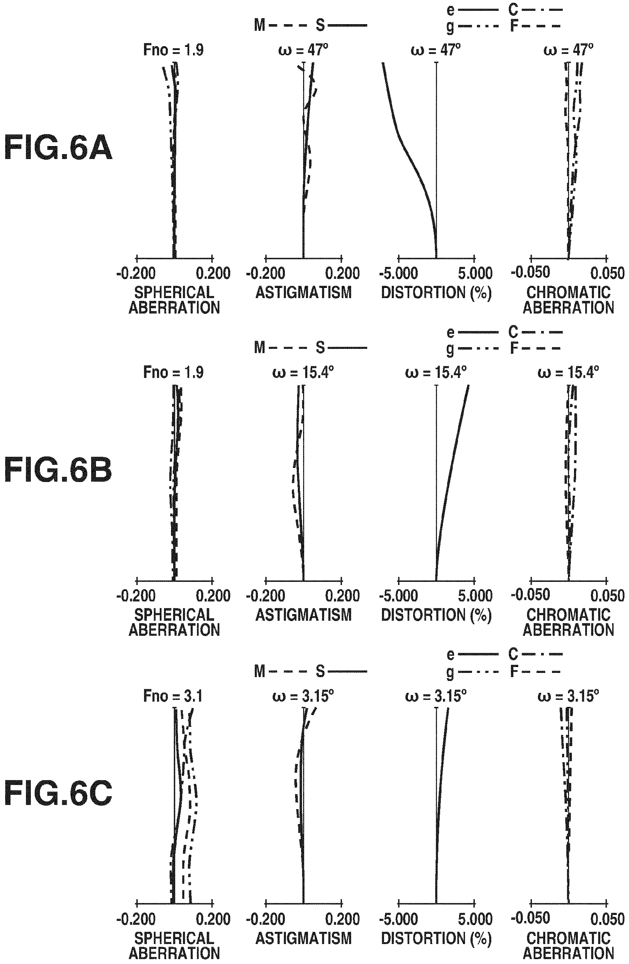

Figs. 6A, 6B, and 6C are diagrams illustrating aberrations in an infinity-focused state at the wide angle end, an intermediate position, and the telephoto end, respectively (see a third numerical example for respective focal lengths). The legends are the same as those described with reference to Figs. 2A to 2C.

The values related to the conditional expressions (1) to (19) according to the present example are listed in Table 1. The values of the variables included in the conditional expressions (1) to (19) are listed in Table 2. The present example can provide a zoom lens that satisfies all the conditional expressions (1) to (19) and is advantageous in terms of a wide angle, a high zoom ratio, small size, light weight, and high optical performance. The zoom lens according to the present example may satisfy the conditional expressions (1) to (3) or the conditional expressions (1), (3), and (19). The conditional expressions (4) to (19) or the conditional expressions (2) and (4) to (18) do not necessarily need to be satisfied in the respective cases. If at least one of the conditional expressions (4) to (19) is satisfied in addition to the conditional expressions (1) to (3), more pronounced effects can be obtained than if not. If at least one of the conditional expressions (2) and (4) to (18) is satisfied in addition to the conditional expressions (1), (3), and (19), more pronounced effects can be obtained than if not.

[Fourth Example]

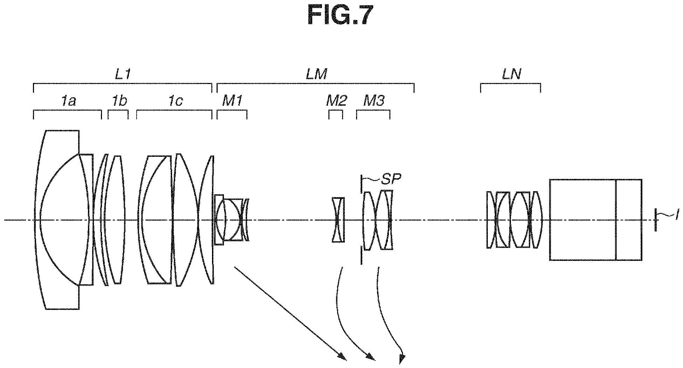

Fig. 7 is a sectional view of a zoom lens according to the fourth example, at the wide angle end and an infinity focusing state. Referring to the diagram, the components of the zoom lens will be described in order from the object side to the image side. A first lens unit L1 has positive refractive power and does not move for zooming. A first sub lens unit 1a in the first lens unit L1 does not move for focusing. A second sub lens unit 1b in the first lens unit L1 moves to the image side for focusing from an infinite object to a closest object. A third sub lens unit 1c in the first lens unit L1 does not move for focusing. Two or more intermediate lens units LM move for zooming. The two or more intermediate lens units LM consist of a first intermediate lens unit M1 having negative refractive power, a second intermediate lens unit M2 having negative refractive power, and a third intermediate lens unit M3 having positive refractive power. The first intermediate lens unit M1 moves monotonically on the optical axis to the image side for zooming from the wide angle end to the telephoto end. The second intermediate lens unit M2 initially moves to the object side and then to the image side for the zooming. The third intermediate lens unit M3 moves on the optical axis (for example, non-monotonically as illustrated in the diagram) for the zooming. An aperture stop SP is located at the object-side end of the third intermediate lens unit M3, and moves with the third intermediate lens unit M3 as one. A rear lens unit LN has positive refractive power and does not move for zooming.

The first lens unit L1 has first to fifteenth surfaces. The first sub lens unit 1a includes the first to sixth surfaces, and consists of two negative lenses and one positive lens. The second sub lens unit 1b includes the seventh and eighth surfaces, and consists of one positive lens having an aspheric surface on the image side. The third sub lens unit 1c includes the ninth to fifteenth surfaces, and consists of three positive lenses and one negative lens.

The two or more intermediate lens units LM have sixteenth to thirty-first surfaces. The first intermediate lens unit M1 includes the sixteenth to twenty-second surfaces, and consists of three negative lenses and one positive lens. The second intermediate lens unit M2 includes the twenty-third to twenty-fifth surfaces, and consists of one negative lens and one positive lens. The aperture stop SP has a twenty-sixth surface. The third intermediate lens unit M3 includes the twenty-sixth surface to thirty-first surfaces, and consists of the aperture stop SP, one negative lens, and two positive lenses. The rear lens unit LN has thirty-second to forty-first surfaces, and consists of two negative lenses and four positive lenses.

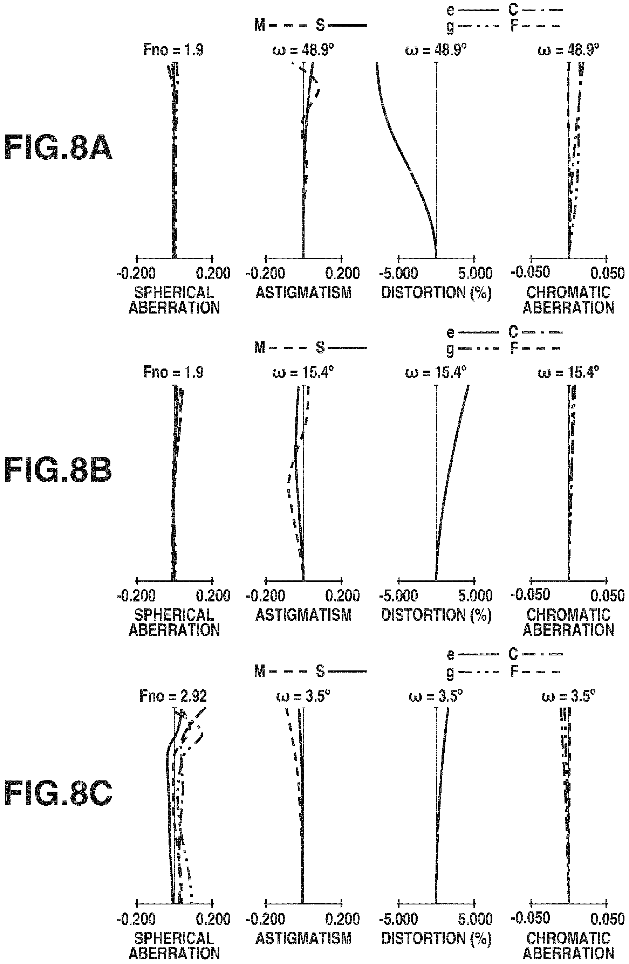

Figs. 8A, 8B, and 8C are diagrams illustrating aberrations in an infinity-focused state at the wide angle end, an intermediate position, and the telephoto end, respectively (see a fourth numerical example for respective focal lengths). The legends are the same as those described with reference to Figs. 2A to 2C.

The values related to the conditional expressions (1) to (19) according to the present example are listed in Table 1. The values of the variables included in the conditional expressions (1) to (19) are listed in Table 2. The present example can provide a zoom lens that satisfies all the conditional expressions (1) to (19) and is advantageous in terms of a wide angle, a high zoom ratio, small size, light weight, and high optical performance. The zoom lens according to the present example may satisfy the conditional expressions (1) to (3) or the conditional expressions (1), (3), and (19). The conditional expressions (4) to (19) or the conditional expressions (2) and (4) to (18) do not necessarily need to be satisfied in the respective cases. If at least one of the conditional expressions (4) to (19) is satisfied in addition to the conditional expressions (1) to (3), more pronounced effects can be obtained than if not. If at least one of the conditional expressions (2) and (4) to (18) is satisfied in addition to the conditional expressions (1), (3), and (19), more pronounced effects can be obtained than if not.

[Fifth Example]

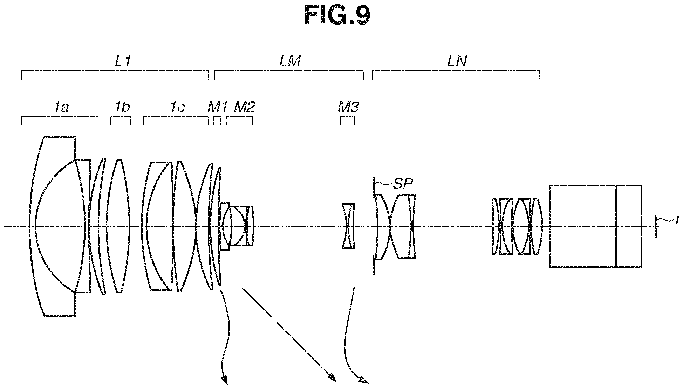

Fig. 9 is a sectional view of a zoom lens according to the fifth example, at the wide angle end and an infinity focusing state. Referring to Fig. 9, the components of the zoom lens will be described in order from the object side to the image side. A first lens unit L1 has positive refractive power and does not move for zooming. A first sub lens unit 1a in the first lens unit L1 does not move for focusing. A second sub lens unit 1b in the first lens unit L1 moves to the image side for focusing from an infinite object to a closest object. A third sub lens unit 1c in the first lens unit L1 does not move for focusing. Two or more intermediate lens units LM move for zooming. The two or more intermediate lens units LM consist of a first intermediate lens unit M1 having positive refractive power, a second intermediate lens unit M2 having negative refractive power, and a third intermediate lens unit M3 having negative refractive power. The first intermediate lens unit M1 initially moves on the optical axis to the image side and then to the object side (moves to the object side after movement to the image side, i.e., to trace a locus convex to the image side) for zooming from the wide angle end to the telephoto end. The second intermediate lens unit M2 moves monotonically on the optical axis to the image side for the zooming. The third intermediate lens unit M3 initially moves on the optical axis to the object side and then to the image side for the zooming. An aperture stop SP does not move for zooming. A rear lens unit LN has positive refractive power and does not move for zooming.

The first lens unit L1 has first to fifteenth surfaces. The first sub lens unit 1a includes the first to sixth surfaces, and consists of two negative lenses and one positive lens. The second sub lens unit 1b includes the seventh and eighth surfaces, and consists of one positive lens having an aspheric surface on the image side. The third sub lens unit 1c includes the ninth to fifteenth surfaces, and consists of three positive lenses and one negative lens.

The two or more intermediate lens units LM have sixteenth to twenty-seventh surfaces. The first intermediate lens unit M1 includes the sixteenth and seventeenth surfaces, and consists of one positive lens. The second intermediate lens unit M2 includes the eighteenth to twenty-fourth surfaces, and consists of three negative lenses and one positive lens. The third intermediate lens unit M3 includes the twenty-fifth to twenty-seventh surfaces, and consists of one negative lens and one positive lens. The aperture stop SP has a twenty-eighth surface. The rear lens unit LN has twenty-ninth to forty-third surfaces, and consists of three negative lenses and six positive lenses.

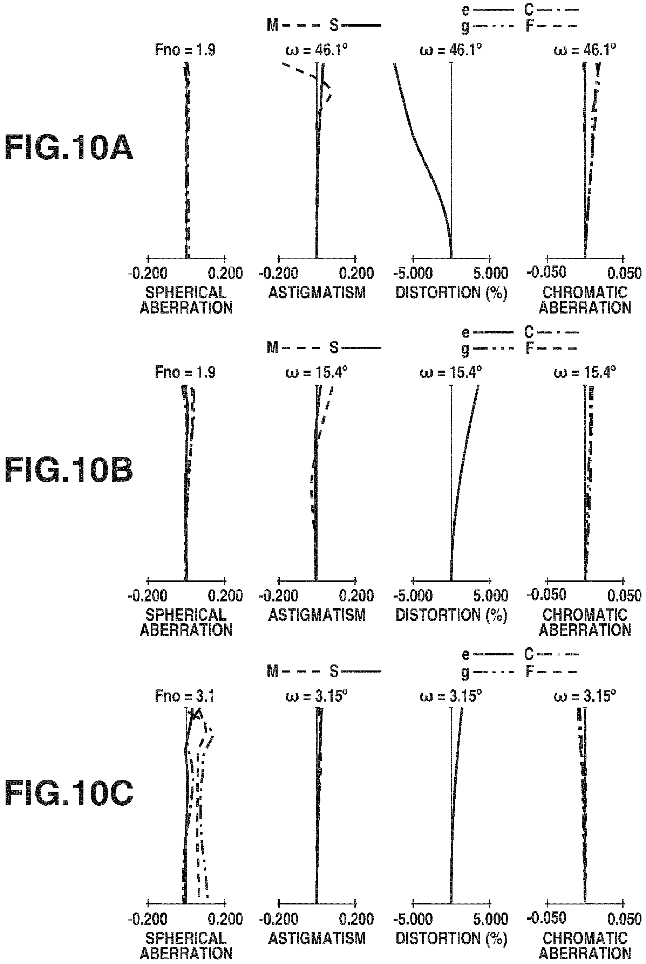

Figs. 10A, 10B, and 10C are diagrams illustrating aberrations in an infinity-focused state at the wide angle end, an intermediate position, and the telephoto end, respectively (see a fifth numerical example for respective focal lengths). The legends are the same as those described with reference to Figs. 2A to 2C.

The values related to the conditional expressions (1) to (19) according to the present example are listed in Table 1. The values of the variables included in the conditional expressions (1) to (19) are listed in Table 2. The present example can provide a zoom lens that satisfies all the conditional expressions (1) to (19) and is advantageous in terms of a wide angle, a high zoom ratio, small size, light weight, and high optical performance. The zoom lens according to the present example may satisfy the conditional expressions (1) to (3) or the conditional expressions (1), (3), and (19). The conditional expressions (4) to (19) or the conditional expressions (2) and (4) to (18) do not necessarily need to be satisfied in the respective cases. If at least one of the conditional expressions (4) to (19) is satisfied in addition to the conditional expressions (1) to (3), more pronounced effects can be obtained than if not. If at least one of the conditional expressions (2) and (4) to (18) is satisfied in addition to the conditional expressions (1), (3), and (19), more pronounced effects can be obtained than if not.

[Sixth Example]

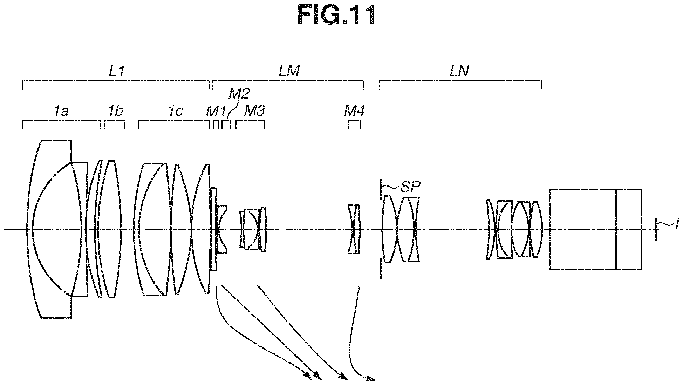

Fig. 11 is a sectional view of a zoom lens according to the sixth example, at the wide angle end and an infinity focusing state. Referring to the diagram, the components of the zoom lens will be described in order from the object side to the image side. A first lens unit L1 has positive refractive power and does not move for zooming. A first sub lens unit 1a in the first lens unit L1 does not move for focusing. A second sub lens unit 1b in the first lens unit L1 moves to the image side for focusing from an infinite object to a closest object. A third sub lens unit 1c in the first lens unit L1 does not move for focusing. Two or more intermediate lens units LM move for zooming. The two or more intermediate lens units LM consist of a first intermediate lens unit M1 having negative refractive power, a second intermediate lens unit M2 having negative refractive power, a third intermediate lens unit M3 having negative refractive power, and a fourth intermediate lens unit M4 having negative refractive power. The first intermediate lens unit M1 moves on the optical axis (for example, non- monotonically as illustrated in Fig. 11) for zooming from the wide angle end to the telephoto end. The second and third intermediate lens units M2 and M3 each move monotonically on the optical axis to the image side for the zooming. The fourth intermediate lens unit M4 initially moves on the optical axis to the object side and then to the image side for the zooming. An aperture stop SP does not move for zooming. A rear lens unit LN has positive refractive power and does not move for zooming.

The first lens unit L1 has first to fifteenth surfaces. The first sub lens unit 1a includes the first to sixth surfaces, and consists of two negative lenses and one positive lens. The second sub lens unit 1b includes the seventh and eighth surfaces, and consists of one positive lens having an aspheric surface on the image side. The third sub lens unit 1c includes the ninth to fifteenth surfaces, and consists of three positive lenses and one negative lens.

The two or more intermediate lens units LM have sixteenth to twenty-ninth surfaces. The first intermediate lens unit M1 includes the sixteenth and seventeenth surfaces, and consists of one negative lens. The second intermediate lens unit M2 includes the eighteenth and nineteenth surfaces, and consists of one negative lens. The third intermediate lens unit M3 includes the twentieth to twenty-sixth surfaces, and consists of three negative lenses and one positive lens. The fourth intermediate lens unit M4 includes the twenty-seventh to twenty-ninth surfaces, and consists of one negative lens and one positive lens. The aperture stop SP has a thirtieth surface. The rear lens unit LN has thirty-first to forty-fifth surfaces, and consists of three negative lenses and six positive lenses.

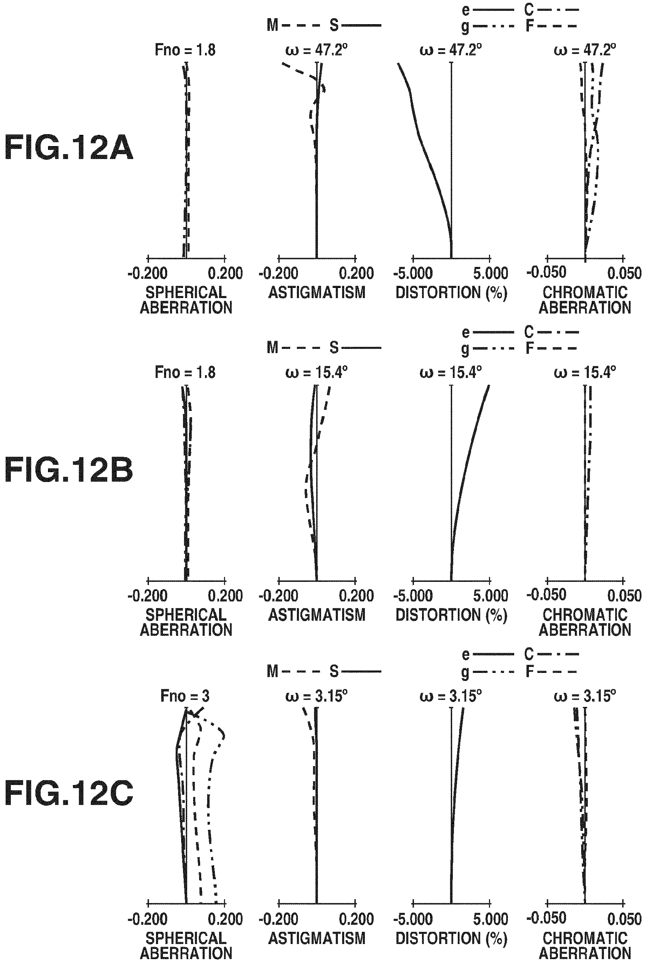

Figs. 12A, 12B, and 12C are diagrams illustrating aberrations in an infinity-focused state at the wide angle end, an intermediate position, and the telephoto end, respectively (see a sixth numerical example for respective focal lengths). The legends are the same as those described with reference to Figs. 2A to 2C.

The values related to the conditional expressions (1) to (19) according to the present example are listed in Table 1. The values of the variables included in the conditional expressions (1) to (19) are listed in Table 2. The present example can provide a zoom lens that satisfies all the conditional expressions (1) to (19) and is advantageous in terms of a wide angle, a high zoom ratio, small size, light weight, and high optical performance. The zoom lens according to the present example may satisfy the conditional expressions (1) to (3) or the conditional expressions (1), (3), and (19). The conditional expressions (4) to (19) or the conditional expressions (2) and (4) to (18) do not necessarily need to be satisfied in the respective cases. If at least one of the conditional expressions (4) to (19) is satisfied in addition to the conditional expressions (1) to (3), more pronounced effects can be obtained than if not. If at least one of the conditional expressions (2) and (4) to (18) is satisfied in addition to the conditional expressions (1), (3), and (19), more pronounced effects can be obtained than if not.

[Seventh Example]

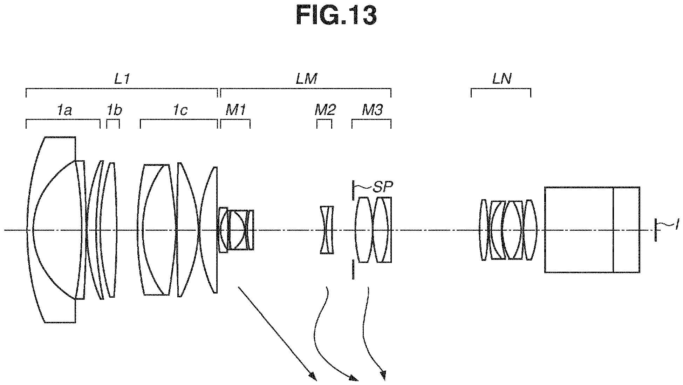

Fig. 13 is a sectional view of a zoom lens according to the seventh example, at the wide angle end and an infinity focusing state. Referring to the diagram, the components of the zoom lens will be described in order from the object side to the image side. A first lens unit L1 has positive refractive power and does not move for zooming. A first sub lens unit 1a in the first lens unit L1 does not move for focusing. A second sub lens unit 1b in the first lens unit L1 moves to the image side for focusing from an infinite object to a closest object. A third sub lens unit 1c in the first lens unit L1 does not move for focusing. Two or more intermediate lens units LM move for zooming. The two or more intermediate lens units LM consist of a first intermediate lens unit M1 having negative refractive power, a second intermediate lens unit M2 having negative refractive power, and a third intermediate lens unit M3 having positive refractive power. The first intermediate lens unit M1 moves monotonically on the optical axis to the image side for zooming from the wide angle end to the telephoto end. The second intermediate lens unit M2 initially moves on the image axis to the object side and then to the object side for the zooming. The third intermediate lens unit M3 moves on the optical axis (for example, non- monotonically as illustrated in the diagram) for the zooming. An aperture stop SP is located at the object-side end of the third intermediate lens unit M3, and moves with the third intermediate lens unit M3 as one. A rear lens unit LN has positive refractive power and does not move for zooming.

The first lens unit L1 has first to fifteenth surfaces. The first sub lens unit 1a includes the first to sixth surfaces, and consists of two negative lenses and one positive lens. The second sub lens unit 1b includes the seventh and eighth surfaces, and consists of one positive lens having an aspheric surface on the image side. The third sub lens unit 1c includes the ninth to fifteenth surfaces, and consists of three positive lenses and one negative lens.

The two or more intermediate lens units LM have sixteenth to thirty-second surfaces. The first intermediate lens unit M1 includes the sixteenth to twenty-third surfaces, and consists of four negative lenses and one positive lens. The second intermediate lens unit M2 corresponds to the twenty-fourth to twenty-sixth surfaces, and consists of one negative lens and one positive lens. The aperture stop SP has a twenty-seventh surface. The third intermediate lens unit M3 includes the twenty-seventh surface to a thirty-second surface, and consists of the aperture stop SP, one negative lens, and two positive lenses. The rear lens unit LN has thirty-third to forty-second surfaces, and consists of two negative lenses and four positive lenses.

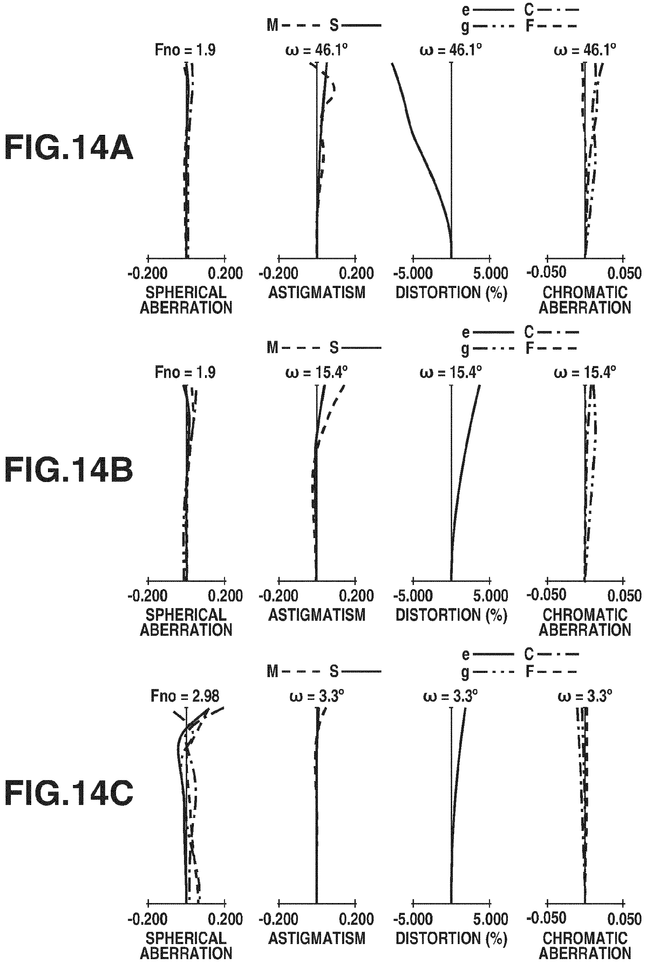

Figs. 14A, 14B, and 14C are diagrams illustrating aberrations in an infinity-focused state at the wide angle end, an intermediate position, and the telephoto end, respectively (see a seventh numerical example for respective focal lengths). The legends are the same as those described with reference to Figs. 2A to 2C.

The values related to the conditional expressions (1) to (19) according to the present example are listed in Table 1. The values of the variables included in the conditional expressions (1) to (19) are listed in Table 2. The present example can provide a zoom lens that satisfies all the conditional expressions (1) to (19) and is advantageous in terms of a wide angle, a high zoom ratio, small size, light weight, and high optical performance. The zoom lens according to the present example may satisfy the conditional expressions (1) to (3) or the conditional expressions (1), (3), and (19). The conditional expressions (4) to (19) or the conditional expressions (2) and (4) to (18) do not necessarily need to be satisfied in the respective cases. If at least one of the conditional expressions (4) to (19) is satisfied in addition to the conditional expressions (1) to (3), more pronounced effects can be obtained than if not. If at least one of the conditional expressions (2) and (4) to (18) is satisfied in addition to the conditional expressions (1), (3), and (19), more pronounced effects can be obtained than if not.


[Eighth Example]

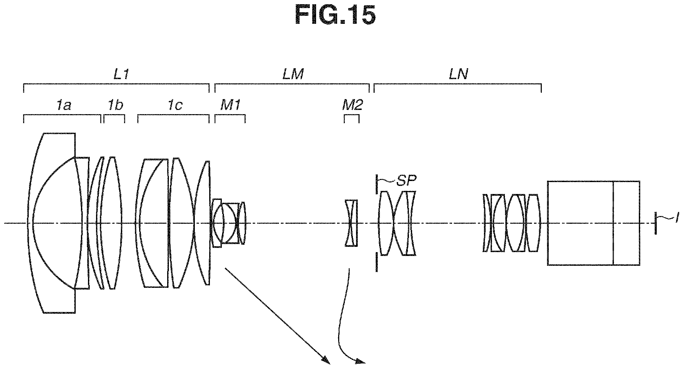

Fig. 15 is a sectional view of a zoom lens according to the eighth example, at the wide angle end and an infinity focusing state. Referring to Fig. 15, the components of the zoom lens will be described in order from the object side to the image side. A first lens unit L1 has positive refractive power and does not move for zooming. A first sub lens unit 1a in the first lens unit L1 does not move for focusing. A second sub lens unit 1b in the first lens unit L1 moves to the image side for focusing from an infinite object to a closest object. A third sub lens unit 1c in the first lens unit L1 does not move for focusing. Two or more intermediate lens units LM move for zooming. The two or more intermediate lens units LM consist of a first intermediate lens unit M1 having negative refractive power and a second intermediate lens unit M2 having negative refractive power. The first intermediate lens unit M1 moves monotonically on the optical axis to the image side for zooming from the wide angle end to the telephoto end. The second intermediate lens unit M2 initially moves on the image axis to the object side and then to the image side for the zooming. An aperture stop SP does not move for zooming. A rear lens unit LN has positive refractive power and does not move for zooming.

The first lens unit L1 has first to fifteenth surfaces. The first sub lens unit 1a includes the first to sixth surfaces, and consists of two negative lenses and one positive lens. The second sub lens unit 1b corresponds to the seventh and eighth surfaces, and consists of one positive lens having an aspheric surface on the image side. The third sub lens unit 1c includes the ninth to fifteenth surfaces, and consists of three positive lenses and one negative lens.

The two or more intermediate lens units LM have sixteenth to twenty-fifth surfaces. The first intermediate lens unit M1 includes the sixteenth and twenty-second surfaces, and consists of three negative lenses and one positive lens. The second intermediate lens unit M2 includes the twenty-third to twenty-fifth surfaces, and consists of one negative lens and one positive lens. The aperture stop SP has a twenty-sixth surface. The rear lens unit LN has twenty-seventh to forty-first surfaces, and consists of three negative lenses and six positive lenses.

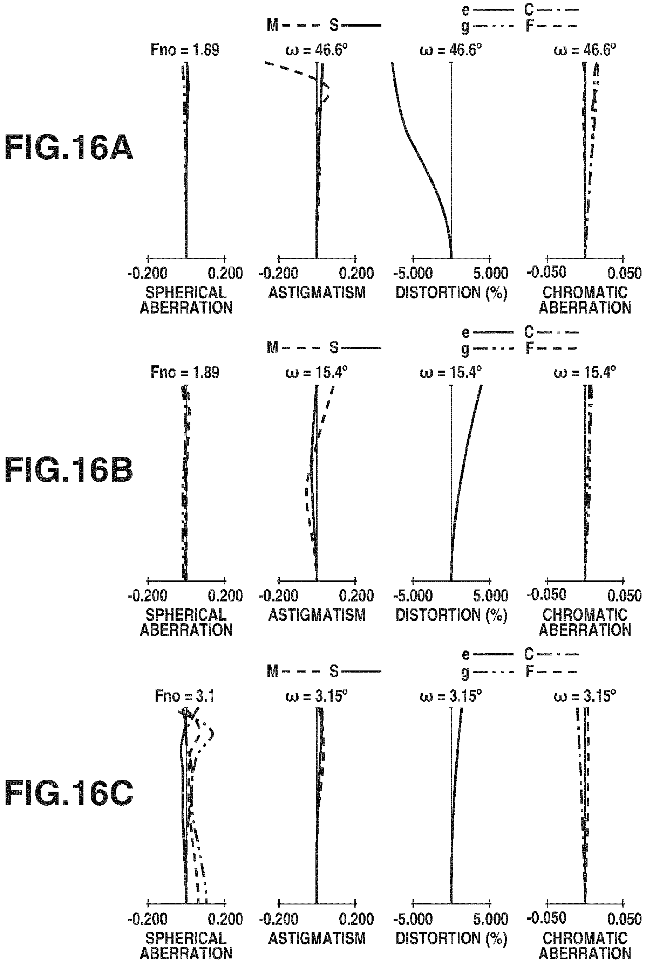

Figs. 16A, 16B, and 16C are diagrams illustrating aberrations in an infinity-focused state at the wide angle end, an intermediate position, and the telephoto end, respectively (see an eighth numerical example for respective focal lengths). The legends are the same as those described with reference to Figs. 2A to 2C.

The values related to the conditional expressions (1) to (19) according to the present example are listed in Table 1. The values of the variables included in the conditional expressions (1) to (19) are listed in Table 2. The present example can provide a zoom lens that satisfies all the conditional expressions (1) to (19) and is advantageous in terms of a wide angle, a high zoom ratio, small size, light weight, and high optical performance. The zoom lens according to the present example may satisfy the conditional expressions (1) to (3) or the conditional expressions (1), (3), and (19). The conditional expressions (4) to (19) or the conditional expressions (2) and (4) to (18) do not necessarily need to be satisfied in the respective cases. If at least one of the conditional expressions (4) to (19) is satisfied in addition to the conditional expressions (1) to (3), more pronounced effects can be obtained than if not. If at least one of the conditional expressions (2) and (4) to (18) is satisfied in addition to the conditional expressions (1), (3), and (19), more pronounced effects can be obtained than if not.

In the first to eighth examples, the rear lens unit LN is described to not move. However, the rear lens unit LN or a part thereof (sub lens unit) may be configured to move. The resulting configurations can also provide the foregoing effects, and such modifications can easily be made by those skilled in the art. For example, in the first example (first numerical example), a portion including the thirty-second to forty-first surfaces of the rear lens unit LN may be configured to move. Since a substantially afocal beam is incident from the object side onto the thirty-second surface, the optical characteristics other than the back focus remain substantially unchanged despite the movement of the portion. The portion can thus be used as a sub lens unit that moves to compensate for a change in focus. Examples of causes for a change in focus for which the rear lens unit LN or the sub lens unit in the rear lens unit LN moves to compensate can include at least one of the following: a manufacturing error of the zoom lens, a temperature change, and a change in orientation.

Details of the numerical values related to the numerical examples will now be described. In the numerical examples, r is the radius of curvature of each surface, d is a surface-to-surface distance, nd or Nd is the absolute refractive index on the Fraunhofer d line at 1 atm, and vd is the Abbe number on d-line. The "half angle of view" ω is defined by the equation ω = arctan (Y/fw), where 2Y is the diagonal image size of the camera using the zoom lens, and fw is the focal length of the zoom lens at the wide angle end. A "maximum image height" is equivalent to one half of the diagonal image size 2Y (for example, 11.00 mm), i.e., Y (for example, 5.50 mm). BF represents back focus (equivalent air length). The last three surfaces are the surfaces of glass blocks, such as a filter. The Abbe number vd is defined the same as a commonly used one, i.e., may be given by the following equation:

$$vd = (Nd - 1)/(NF - NC),$$

where Nd, NF, and NC are the refractive indexes on the Fraunhofer d, F, and C lines, respectively.

The shape of an aspheric surface is expressed with the direction of the optical axis as an X-axis, a direction orthogonal to the optical axis direction as an H-axis, and the traveling direction of light as positive. The shape of an aspheric surface (the amount of deviation from a reference spherical surface) is expressed by the following formula:

$$X = \frac{H^2/R}{1+\sqrt{1-(1+k)(H/R)^2}} + A4H^4 + A6H^6 + A8H^8 + A10H^{10} + A12H^{12} + A14H^{14} + A16H^{16}$$
$$+ A3H^3 + A5H^5 + A7H^7 + A9H^9 + A11H^{11} + A13H^{13} + A15H^{15}$$

,

where R is the paraxial radius of curvature, k is the conic constant, and A3, A4, A5, A6, A7, A8, A9, A10, A11, A12, A13, A14, A15, and A16 are aspheric coefficients. In the numerical examples, "e-Z" represents "× 10^{-Z}". The mark "*" on the right of a surface number indicates that the surface is aspheric.

[First Numerical Example]

Unit: mm

Surface Data

| Surface No. | r | d | nd | vd |
|---|---|---|---|---|
| 1* | 475.202 | 2.70 | 1.80100 | 35.0 |
| 2 | 40.032 | 26.17 | | |
| 3 | -90.288 | 2.10 | 1.80400 | 46.5 |
| 4 | -1164.979 | 0.14 | | |
| 5 | 108.881 | 4.43 | 1.92286 | 20.9 |
| 6 | 219.518 | 2.00 | | |

(continued)

Unit: mm
Surface Data

| Surface No. | r | d | nd | vd |
|---|---|---|---|---|
| 7 | 127.381 | 12.61 | 1.49700 | 81.5 |
| 8* | -93.529 | 6.35 | | |
| 9 | 102.323 | 2.00 | 1.78880 | 28.4 |
| 10 | 49.946 | 18.08 | 1.43875 | 94.7 |
| 11 | -214.920 | 0.29 | | |
| 12 | 239.287 | 10.68 | 1.43387 | 95.1 |
| 13 | -94.079 | 0.28 | | |
| 14 | 79.700 | 7.46 | 1.76385 | 48.5 |
| 15 | 602.538 | (variable) | | |
| 16* | 681.498 | 0.95 | 2.00100 | 29.1 |
| 17 | 15.780 | 4.14 | | |
| 18 | -123.476 | 6.99 | 1.85896 | 22.7 |
| 19 | -12.291 | 0.70 | 1.88300 | 40.8 |
| 20 | 66.919 | 0.30 | | |
| 21 | 28.701 | 2.85 | 1.63980 | 34.5 |
| 22 | 194.618 | (variable) | | |
| 23 | -31.208 | 0.80 | 1.75500 | 52.3 |
| 24 | 40.275 | 2.66 | 1.85478 | 24.8 |
| 25 | 1601.686 | (variable) | | |
| 26* | 107.294 | 4.29 | 1.64000 | 60.1 |
| 27 | -77.957 | 0.20 | | |
| 28 | 91.989 | 5.69 | 1.56732 | 42.8 |
| 29 | -40.874 | 1.00 | 2.00100 | 29.1 |
| 30 | -77.095 | (variable) | | |
| 31 (SP) | ∞ | 39.88 | | |
| 32 | -228.648 | 2.75 | 1.80518 | 25.4 |
| 33 | -59.940 | 2.39 | | |
| 34 | 53.095 | 0.90 | 1.88300 | 40.8 |
| 35 | 20.555 | 4.85 | 1.51633 | 64.1 |
| 36 | 47.523 | 0.19 | | |
| 37 | 28.080 | 9.39 | 1.43875 | 94.7 |
| 38 | -29.076 | 0.90 | 2.00100 | 29.1 |
| 39 | -130.230 | 0.36 | | |
| 40 | 58.935 | 5.77 | 1.48749 | 70.2 |
| 41 | -42.079 | 4.00 | | |
| 42 | ∞ | 3 3.00 | 1.60859 | 46.4 |
| 43 | ∞ | 1 3.20 | 1.51633 | 64.1 |
| 44 | ∞ | 7.41 | | |
| image plane | ∞ | | | |

Aspheric Surface Data

First surface

K= 1.77286e+000 A4 = 1.88640e-006 A6 = 8.98167e-009 A8 = -1.71668e-011 A10 = -7.10437e-015 A12 = -3.06006e-019 A14 = 4.91025e-022 A16 = 3.69819e-025 A3 = -1.30003e-006 A5 = -1.50816e-007 A7 =-6.28209e-011 A 9= 7.27765e-013 A11 = -1.16151e-016 A13 = 7.78597e-020 A15=-4.19570e-023

Eighth surface

K = 1.33745e+000 A4 = 1.09447e-006 A6 =-4.70763e-009 A8 = -2.57894e-011 A10 = -4.40575e-015 A12 = 6.33346e-018 A14 = 8.61602e-021 A16 = 2.13621e-024 A3 = -9.12868e-008 A5 = 1.81945e-008 A7 = 4.82615e-010 A9 = 7.02390e-013 A11 = -2.50729e-016 A13 = -1.59078e-019 A15 = -2.30524e-022

Sixteenth surface

K = 2.00035e+000 A4 = 1.34949e-005 A6 = 7.16717e-007 A8 = 1.75069e-008 A10 = 5.73514e-010 A12 = 7.93307e-012 A14 = -3.44623e-014 A16 = -7.76448e-017 A3 = 3.86924e-006 A5 = -2.63632e-006 A7 = -1.41965e-007 A9 = -2.36214e-009 A11 = -9.70332e-011 A13 = -1.13397e-013 A15 = 2.90019e-015

Twenty-sixth surface

K = 1.99774e+000 A4 = -2.78121e-006 A6 = 1.74374e-009 A8 = -2.06772e-012

### Various Types of Data

| zoom ratio | 20.00 | | |
|---|---|---|---|
| | wide | intermediate | telephoto |
| focal length | 5.00 | 25.00 | 100.00 |
| F-number | 1.80 | 1.80 | 2.95 |
| half angle of view | 47.73 | 12.41 | 3.15 |
| maximum image height | 5.50 | 5.50 | 5.50 |
| overall lens length | 318.40 | 318.40 | 318.40 |
| BF | 7.41 | 7.41 | 7.41 |
| d15 | 0.70 | 42.30 | 54.93 |
| d22 | 37.98 | 3.28 | 3.14 |
| d25 | 13.21 | 17.35 | 1.68 |
| d30 | 15.66 | 4.61 | 7.79 |
| d44 | 7.41 | 7.41 | 7.41 |

### Zoom Lens Unit Data

| Unit | Starting surface | Focal length |
|---|---|---|
| 1 | 1 | 40.28 |
| 2 | 16 | -15.51 |
| 3 | 23 | -44.96 |
| 4 | 26 | 44.92 |
| 5 | 31 | 50.08 |

### [Second Numerical Example]

Unit: mm
Surface Data

| Surface No. | r | d | nd | vd |
|---|---|---|---|---|
| 1* | 174.041 | 2.70 | 1.83481 | 42.7 |
| 2 | 40.624 | 19.15 | | |
| 3 | -1313.075 | 2.10 | 1.83481 | 42.7 |
| 4 | 354.389 | 8.34 | | |
| 5 | -88.120 | 2.10 | 1.80400 | 46.5 |
| 6 | -1624.589 | 0.15 | | |
| 7 | 115.265 | 4.13 | 1.95906 | 17.5 |
| 8 | 238.199 | 3.07 | | |

(continued)

Unit: mm

Surface Data

| Surface No. | r | d | nd | vd |
|---|---|---|---|---|
| 9 | 123.287 | 13.57 | 1.49700 | 81.5 |
| 10* | -79.214 | 5.65 | | |
| 11 | 111.728 | 2.00 | 1.85478 | 24.8 |
| 12 | 51.788 | 15.57 | 1.43875 | 94.7 |
| 13 | -254.503 | 0.30 | | |
| 14 | 137.921 | 11.19 | 1.43387 | 95.1 |
| 15 | -106.737 | 0.29 | | |
| 16 | 74.652 | 8.34 | 1.76385 | 48.5 |
| 17 | 1786.354 | (variable) | | |
| 18* | 1005.944 | 0.95 | 2.00100 | 29.1 |
| 19 | 16.033 | 3.97 | | |
| 20 | -187.770 | 6.39 | 1.85896 | 22.7 |
| 21 | -13.138 | 0.70 | 1.88300 | 40.8 |
| 22 | 55.404 | 0.30 | | |
| 23 | 27.266 | 3.05 | 1.63980 | 34.5 |
| 24 | 300.985 | (variable) | | |
| 25 | -26.985 | 0.80 | 1.75500 | 52.3 |
| 26 | 32.854 | 2.89 | 1.85478 | 24.8 |
| 27 | 785.921 | (variable) | | |
| 28* | 56.082 | 5.05 | 1.59522 | 67.7 |
| 29 | -95.825 | 0.20 | | |
| 30 | -510.689 | 5.43 | 1.56732 | 42.8 |
| 31 | -28.443 | 1.00 | 2.00100 | 29.1 |
| 32 | -45.222 | (variable) | | |
| 33 (SP) | ∞ | 39.89 | | |
| 34 | 112.601 | 3.09 | 1.80518 | 25.4 |
| 35 | -124.592 | 2.06 | | |
| 36 | 78.371 | 0.90 | 1.88300 | 40.8 |
| 37 | 20.087 | 4.77 | 1.51633 | 64.1 |
| 38 | 45.784 | 0.20 | | |
| 39 | 29.919 | 9.18 | 1.43875 | 94.7 |
| 40 | -26.618 | 0.90 | 2.00100 | 29.1 |
| 41 | -82.046 | 0.49 | | |
| 42 | 67.966 | 5.90 | 1.48749 | 70.2 |
| 43 | -37.203 | 4.00 | | |
| 44 | ∞ | 33.00 | 1.60859 | 46.4 |
| 45 | ∞ | 13.20 | 1.51633 | 64.1 |
| 46 | ∞ | 7.41 | | |
| image plane | ∞ | | | |

Aspheric Surface Data

First surface

K = -2.00107e+000 A4 = 1.10973e-006 A6 = 7.57220e-009 A8 = -1.80903e-011 A10 = -6.63204e-015 A12 = -4.31184e-019 A14 = 4.41491e-022 A16 = 3.59526e-025 A3 = -1.59188e-006 A5 = -1.25946e-007 A7 = 1.63633e-012 A9 = 7.13431e-013 A11 = -1.16204e-016 A13 = 7.98730e-020 A15 = -4.07184e-023

18

Tenth surface

K = 3.19845e-001 A4 = 9.27271e-007 A6 = -4.19167e-009 A8 = -2.51571e-011 A10 = -4.80914e-015 A12 = 6.37532e-018 A14 = 8.83496e-021 A16 = 2.32484e-024 A3 = -1.33889e-007 A5 = 1.74292e-008 A7 = 4.48536e-010 A9 = 7.23194e-013 A11 = -2.71872e-016 A13 = -1.40477e-019 A15 = -2.49061e-022

Eighteenth surface

K = 2.00000e+000 A4 = 9.51878e-006 A6 = 4.67898e-007 A8 = 1.82309e-008 A10 = 5.53819e-010 A12 = 8.12146e-012 A14 =-3.54721e-014 A16 = -6.73362e-017 A3 = 5.78892e-006 A5 = -1.25384e-006 A7 = -1.21010e-007 A9 = -2.55969e-009 A11 = -9.46183e-011 A13 = -1.18997e-013 A15 = 2.78157e-015

Twenty-eighth surface

K = -2.00001e+000 A4 = -2.87526e-006 A6 = 3.63896e-009 A8 = -3.03565e-012

| Various Types of Data | | | |
|---|---|---|---|
| zoom ratio | 19.61 | | |
| | wide | intermediate | telephoto |
| focal length | 5.10 | 25.00 | 100.00 |
| F-number | 1.90 | 1.89 | 3.10 |
| half angle of view | 47.16 | 12.41 | 3.15 |
| maximum image height | 5.50 | 5.50 | 5.50 |
| overall lens length | 318.53 | 318.53 | 318.53 |
| BF | 7.41 | 7.41 | 7.41 |
| d17 | 0.70 | 37.73 | 48.45 |
| d24 | 30.93 | 3.13 | 3.14 |
| d27 | 17.97 | 19.21 | 1.70 |
| d32 | 14.56 | 4.09 | 10.88 |
| d46 | 7.41 | 7.41 | 7.41 |

| Zoom Lens Unit Data | | |
|---|---|---|
| Unit | Starting surface | Focal length |
| 1 | 1 | 35.84 |
| 2 | 18 | -16.30 |
| 3 | 25 | -38.40 |
| 4 | 28 | 45.77 |
| 5 | 33 | 51.13 |

[Third Numerical Example]

Unit: mm

Surface Data

| Surface No. | r | d | nd | vd |
|---|---|---|---|---|
| 1* | 227.228 | 2.70 | 1.80610 | 33.3 |
| 2 | 40.007 | 25.26 | | |
| 3 | -95.129 | 2.10 | 1.81600 | 46.6 |
| 4 | 854.481 | 0.15 | | |
| 5 | 104.478 | 5.44 | 1.78880 | 28.4 |
| 6 | 355.740 | 1.01 | | |
| 7 | 142.021 | 2.00 | 1.85478 | 24.8 |
| 8 | 98.271 | 12.09 | 1.43875 | 94.7 |

(continued)

Unit: mm
Surface Data

| Surface No. | r | d | nd | vd |
|---|---|---|---|---|
| 9* | -132.660 | 8.64 | | |
| 10 | 65.245 | 2.00 | 1.88300 | 40.8 |
| 11 | 48.410 | 15.63 | 1.43875 | 94.7 |
| 12 | -544.774 | 0.29 | | |
| 13 | 236.687 | 9.44 | 1.43387 | 95.1 |
| 14 | -97.884 | 0.29 | | |
| 15* | 54.063 | 8.51 | 1.59410 | 60.5 |
| 16 | 350.919 | (variable) | | |
| 17* | 544.832 | 0.95 | 2.00330 | 28.3 |
| 18 | 15.674 | 3.79 | | |
| 19 | -161.576 | 7.35 | 1.80810 | 22.8 |
| 20 | -11.484 | 0.70 | 1.88300 | 40.8 |
| 21 | 68.375 | 0.32 | | |
| 22 | 30.204 | 2.75 | 1.68893 | 31.1 |
| 23 | 173.973 | (variable) | | |
| 24 | -26.568 | 0.80 | 1.72916 | 54.7 |
| 25 | 33.104 | 2.85 | 1.85478 | 24.8 |
| 26 | 273.093 | (variable) | | |
| 27 (SP) | ∞ | 1.00 | | |
| 28* | 162.668 | 6.38 | 1.59522 | 67.7 |
| 29 | -33.173 | 0.20 | | |
| 30 | 35.990 | 7.15 | 1.59551 | 39.2 |
| 31 | -59.520 | 1.00 | 1.95375 | 32.3 |
| 32 | 127.752 | (variable) | | |
| 33 | -339.907 | 3.01 | 1.74077 | 27.8 |
| 34 | -50.885 | 0.60 | | |
| 35 | 154.174 | 0.90 | 1.88300 | 40.8 |
| 36 | 24.109 | 5.90 | 1.51823 | 58.9 |
| 37 | 654.671 | 0.20 | | |
| 38 | 29.807 | 9.13 | 1.43875 | 94.7 |
| 39 | -30.156 | 0.90 | 2.00100 | 29.1 |
| 40 | -229.253 | 0.19 | | |
| 41 | 59.509 | 5.63 | 1.48749 | 70.2 |
| 42 | -45.281 | 4.00 | | |
| 43 | ∞ | 33.00 | 1.60859 | 46.4 |
| 44 | ∞ | 13.20 | 1.51633 | 64.1 |
| 45 | ∞ | 7.41 | | |
| image plane | ∞ | | | |

Aspheric Surface Data

First surface

K = -1.47014e+000 A4 = 1.14647e-006 A6 = -7.45319e-010 A8 = 3.35730e-013 A10 = 2.65567e-016 A12 = -3.66418e-019 A14 = 1.48891e-022 A16 = -2.10516e-026

Ninth surface

K = 2.00352e+000 A4 = 1.03929e-007 A6 = 1.39948e-010 A8 = 3.04787e-014 A10 = -6.79662e-017 A12 = 1.54607e-021 A14 = 8.80613e-023 A16 = -5.29944e-026

Fifteenth surface

K = 1.03087e+000 A4 = -1.67445e-006 A6 = -7.07943e-010 A8 = 1.68743e-014 A10 = -8.40482e-016 A12 = 6.98921e-019 A14 = -3.81430e-022 A16 = -1.24247e-026

Seventeenth surface

K = -1.99999e+000 A4 = 1.39316e-005 A6 = -1.22092e-007 A8 = 2.82531e-009 A10 = -3.41299e-011 A12 = 1.53243e-013 A14 = 2.10605e-016 A16 = -2.51826e-018

Twenty-eighth surface

K = 2.00002e+000 A4 = -4.56922e-006 A6 = 1.99880e-009 A8 = -1.02956e-012

|  | Various Types of Data | | |
|---|---|---|---|
| zoom ratio | 19.50 | | |
|  | wide | intermediate | telephoto |
| focal length | 5.12 | 20.00 | 99.84 |
| F-number | 1.90 | 1.90 | 3.10 |
| half angle of view | 47.05 | 15.38 | 3.15 |
| maximum image height | 5.50 | 5.50 | 5.50 |
| overall lens length | 313.53 | 313.53 | 313.53 |
| BF | 7.41 | 7.41 | 7.41 |
| d16 | 0.69 | 35.67 | 52.63 |
| d23 | 38.22 | 4.80 | 4.76 |
| d26 | 9.53 | 13.91 | 1.50 |
| d32 | 50.27 | 44.33 | 39.82 |
| d45 | 7.41 | 7.41 | 7.41 |

|  | Zoom Lens Unit Data | |
|---|---|---|
| Unit | Starting surface | Focal length |
| 1 | 1 | 39.50 |
| 2 | 17 | -14.52 |
| 3 | 24 | -37.20 |
| 4 | 27 | 37.28 |
| 5 | 33 | 49.31 |

[Fourth Numerical Example]

Unit: mm

Surface Data

| Surface No. | r | d | nd | vd |
|---|---|---|---|---|
| 1* | 512.244 | 2.70 | 1.89190 | 37.1 |
| 2 | 37.400 | 24.42 | | |
| 3 | -113.847 | 2.10 | 1.67300 | 38.3 |
| 4 | -1123.095 | 0.15 | | |
| 5 | 87.986 | 3.89 | 1.89286 | 20.4 |
| 6 | 145.595 | 1.61 | | |
| 7 | 98.696 | 10.19 | 1.49700 | 81.5 |
| 8* | -146.730 | 6.71 | | |

(continued)

Unit: mm
Surface Data

| Surface No. | r | d | nd | vd |
|---|---|---|---|---|
| 9 | 106.848 | 2.00 | 1.85025 | 30.1 |
| 10 | 48.375 | 15.42 | 1.43875 | 94.7 |
| 11 | -397.015 | 0.30 | | |
| 12 | 284.694 | 12.23 | 1.43387 | 95.1 |
| 13 | -67.059 | 0.29 | | |
| 14 | 83.024 | 7.35 | 1.76385 | 48.5 |
| 15 | 1935.536 | (variable) | | |
| 16* | 125.420 | 0.95 | 2.00100 | 29.1 |
| 17 | 15.875 | 4.48 | | |
| 18 | -79.151 | 7.38 | 1.85896 | 22.7 |
| 19 | -11.986 | 0.70 | 1.88300 | 40.8 |
| 20 | 100.603 | 0.30 | | |
| 21 | 28.883 | 2.50 | 1.63980 | 34.5 |
| 22 | 80.747 | (variable) | | |
| 23 | -28.720 | 0.80 | 1.75500 | 52.3 |
| 24 | 34.396 | 3.10 | 1.85478 | 24.8 |
| 25 | 471.015 | (variable) | | |
| 26 (SP) | ∞ | 1.00 | | |
| 27* | 184.455 | 5.72 | 1.69930 | 51.1 |
| 28 | -38.366 | 0.20 | | |
| 29 | 38.365 | 6.86 | 1.59551 | 39.2 |
| 30 | -49.921 | 1.00 | 2.00100 | 29.1 |
| 31 | 180.581 | (variable) | | |
| 32 | -1933.475 | 4.17 | 1.74077 | 27.8 |
| 33 | -50.158 | 0.50 | | |
| 34 | 2030.689 | 0.90 | 1.88300 | 40.8 |
| 35 | 26.095 | 6.19 | 1.51823 | 58.9 |
| 36 | -209.164 | 0.20 | | |
| 37 | 30.661 | 8.89 | 1.43875 | 94.7 |
| 38 | -31.476 | 0.90 | 2.00100 | 29.1 |
| 39 | -329.239 | 0.20 | | |
| 40 | 54.422 | 5.56 | 1.48749 | 70.2 |
| 41 | -50.138 | 4.00 | | |
| 42 | ∞ | 33.00 | 1.60859 | 46.4 |
| 43 | ∞ | 13.20 | 1.51633 | 64.1 |
| 44 | ∞ | 7.41 | | |
| image plane | ∞ | | | |

Aspheric Surface Data

First surface

K = -1.99070e+000 A4 = 1.47054e-006 A6 = 2.10577e-010 A8 = -1.59716e-012 A10 = 2.11720e-015 A12 = -1.37723e-018 A14 = 4.49066e-022 A16 = -5.86605e-026

Eighth surface

K = 8.75478e-001 A4 = 1.22566e-006 A6 = 3.02026e-012 A8 = -2.92903e-013 A10 = 4.25812e-016 A12 = -7.27226e-019 A14 = 6.13458e-022 A16 = -1.93903e-025

Sixteenth surface

K = -1.99097e+000 A4 = 5.29007e-006 A6 = -1.44517e-007 A8 = 3.45622e-009 A10 = -3.50897e-011 A12 = 8.99838e-014 A14 = 6.59548e-016 A16 = -3.22773e-018

Twenty-seventh surface

K = 2.00450e+000 A4 = -2.34756e-006 A6 = 9.79105e-010 A8 = -1.71710e-013

Various Types of Data

| | | wide | intermediate | telephoto |
|---|---|---|---|---|
| zoom ratio | 18.75 | | | |
| focal length | | 4.80 | 20.00 | 90.02 |
| F-number | | 1.90 | 1.90 | 2.92 |
| half angle of view | | 48.88 | 15.38 | 3.50 |
| maximum image height | | 5.50 | 5.50 | 5.50 |
| overall lens length | | 312.1 | 312.10 | 312.10 |
| BF | | 7.41 | 7.41 | 7.41 |
| d15 | | 0.65 | 40.31 | 57.81 |
| d22 | | 44.67 | 6.04 | 5.12 |
| d25 | | 9.09 | 13.88 | 2.13 |
| d31 | | 48.2 | 42.39 | 37.57 |
| d44 | | 7.4 | 7.41 | 7.41 |

Zoom Lens Unit Data

| Unit | Starting surface | Focal length |
|---|---|---|
| 1 | 1 | 40.44 |
| 2 | 16 | -15.81 |
| 3 | 23 | -39.59 |
| 4 | 26 | 38.52 |
| 5 | 32 | 49.15 |

[Fifth Numerical Example]

Unit: mm

Surface Data

| Surface No. | r | d | nd | vd |
|---|---|---|---|---|
| 1* | 179.818 | 2.70 | 1.80100 | 35.0 |
| 2 | 37.725 | 25.30 | | |
| 3 | -108.269 | 2.10 | 1.85150 | 40.8 |
| 4 | 1127.506 | 0.15 | | |
| 5 | 89.841 | 4.26 | 1.92286 | 18.9 |
| 6 | 159.702 | 4.31 | | |
| 7 | 111.875 | 10.71 | 1.49700 | 81.5 |
| 8* | -129.558 | 6.64 | | |
| 9 | 109.685 | 2.00 | 1.78880 | 28.4 |
| 10 | 49.892 | 13.84 | 1.43875 | 94.7 |
| 11 | -784.724 | 0.30 | | |
| 12 | 288.190 | 10.88 | 1.43387 | 95.1 |
| 13 | -73.552 | 0.30 | | |
| 14 | 77.168 | 6.24 | 1.76385 | 48.5 |
| 15 | 294.593 | (variable) | | |

(continued)

Unit: mm
Surface Data

| Surface No. | r | d | nd | vd |
|---|---|---|---|---|
| 16 | 109.284 | 3.73 | 1.59522 | 67.7 |
| 17 | 299.379 | (variable) | | |
| 18* | 144.434 | 0.95 | 2.00100 | 29.1 |
| 19 | 14.200 | 4.61 | | |
| 20 | -54.398 | 6.39 | 1.80810 | 22.8 |
| 21 | -11.545 | 0.70 | 1.88300 | 40.8 |
| 22 | 89.341 | 0.30 | | |
| 23 | 33.967 | 3.44 | 1.67270 | 32.1 |
| 24 | -111.914 | (variable) | | |
| 25 | -26.763 | 0.80 | 1.72916 | 54.7 |
| 26 | 41.443 | 2.93 | 1.84666 | 23.8 |
| 27 | 19347.361 | (variable) | | |
| 28 (SP) | ∞ | 1.00 | | |
| 29* | 667.085 | 6.79 | 1.65160 | 58.5 |
| 30 | -31.005 | 0.20 | | |
| 31 | 30.374 | 10.42 | 1.53172 | 48.8 |
| 32 | -70.634 | 1.00 | 1.95375 | 32.3 |
| 33 | 80.163 | 39.97 | | |
| 34 | -255.694 | 3.16 | 1.74077 | 27.8 |
| 35 | -45.039 | 0.50 | | |
| 36 | 579.971 | 0.90 | 1.88300 | 40.8 |
| 37 | 26.686 | 5.12 | 1.51823 | 58.9 |
| 38 | 3737.770 | 0.20 | | |
| 39 | 32.320 | 8.30 | 1.43875 | 94.7 |
| 40 | -29.297 | 0.90 | 2.00100 | 29.1 |
| 41 | -128.870 | 0.20 | | |
| 42 | 52.950 | 4.92 | 1.48749 | 70.2 |
| 43 | -59.560 | 4.00 | | |
| 44 | ∞ | 33.00 | 1.60859 | 46.4 |
| 45 | ∞ | 13.20 | 1.51633 | 64.1 |
| 46 | ∞ | 7.41 | | |
| image plane | ∞ | | | |

Aspheric Surface Data

First surface

K = 1.94310e+000 A4 = 4.55712e-007 A6 = 6.11475e-010 A8 = -1.26960e-012 A10 = 1.32254e-015 A12 = -7.31964e-019 A14 = 2.00744e-022 A16 = -2.12749e-026

Eighth surface

K = 1.60334e+000 A4 = 1.00287e-006 A6 = 8.32220e-011 A8 = -1.57432e-013 A10 = 1.77071e-016 A12 = -3.82845e-019 A14 = 3.83785e-022 A16 = -1.40985e-025

Eighteenth surface

K = -3.51872e-001 A4 = 1.04203e-005 A6 = -9.81878e-008 A8 = 2.43448e-009 A10 = -3.45061e-011 A12 = 2.04688e-013 A14 = -2.06918e-016 A16 = -1.43470e-018

24

Twenty-ninth surface

K = -2.00004e+000 A4 = -4.54375e-006 A6 = 1.57151e-009 A8 = -1.62189e-012

Various Types of Data

zoom ratio  18.87

|  | wide | intermediate | telephoto |
|---|---|---|---|
| focal length | 5.30 | 20.00 | 100.00 |
| F-number | 1.90 | 1.90 | 3.10 |
| half angle of view | 46.06 | 15.38 | 3.15 |
| maximum image height | 5.50 | 5.50 | 5.50 |
| overall lens length | 313.53 | 313.53 | 313.53 |
| BF | 7.41 | 7.41 | 7.41 |
| d15 | 1.00 | 4.07 | 3.62 |
| d17 | 0.65 | 30.54 | 46.71 |
| d24 | 47.29 | 10.10 | 6.93 |
| d27 | 9.83 | 14.06 | 1.50 |
| d46 | 7.41 | 7.41 | 7.41 |

Zoom Lens Unit Data

| Unit | Starting surface | Focal length |
|---|---|---|
| 1 | 1 | 49.92 |
| 2 | 16 | 286.04 |
| 3 | 18 | -15.32 |
| 4 | 25 | -40.96 |
| 5 | 28 | 69.28 |

[Sixth Numerical Example]

Unit: mm

Surface Data

| Surface No. | r | d | nd | vd |
|---|---|---|---|---|
| 1* | 221.313 | 2.70 | 1.80100 | 35.0 |
| 2 | 39.754 | 24.98 | | |
| 3 | -108.475 | 2.10 | 1.83481 | 42.7 |
| 4 | 427.300 | 0.14 | | |
| 5 | 91.778 | 4.66 | 1.89286 | 20.4 |
| 6 | 171.935 | 1.62 | | |
| 7 | 119.733 | 11.52 | 1.49700 | 81.5 |
| 8* | -126.235 | 6.43 | | |
| 9 | 112.031 | 2.00 | 1.78880 | 28.4 |
| 10 | 50.070 | 16.78 | 1.43875 | 94.7 |
| 11 | -185.057 | 0.29 | | |
| 12 | 367.718 | 9.36 | 1.43387 | 95.1 |
| 13 | -89.051 | 0.28 | | |
| 14 | 74.594 | 9.27 | 1.76385 | 48.5 |
| 15 | -1385.481 | (variable) | | |
| 16 | 2016.388 | 2.00 | 1.59522 | 67.7 |
| 17 | 252.665 | (variable) | | |
| 18* | 173.152 | 0.95 | 2.00069 | 25.5 |
| 19 | 15.352 | (variable) | | |

(continued)

Unit: mm

Surface Data

| Surface No. | r | d | nd | vd |
|---|---|---|---|---|
| 20 | -45.642 | 0.90 | 1.89190 | 37.1 |
| 21 | 94.649 | 0.30 | | |
| 22 | 143.740 | 6.97 | 1.80810 | 22.8 |
| 23 | -11.485 | 0.70 | 1.89190 | 37.1 |
| 24 | 241.662 | 0.30 | | |
| 25 | 50.771 | 3.73 | 1.67270 | 32.1 |
| 26 | -56.089 | (variable) | | |
| 27 | -32.399 | 0.80 | 1.77250 | 49.6 |
| 28 | 72.677 | 2.46 | 1.85896 | 22.7 |
| 29 | -351.427 | (variable) | | |
| 30 (SP) | ∞ | 1.00 | | |
| 31* | 105.600 | 7.12 | 1.77250 | 49.6 |
| 32 | -43.309 | 0.20 | | |
| 33 | 38.750 | 8.60 | 1.58144 | 40.8 |
| 34 | -51.182 | 1.00 | 1.95375 | 32.3 |
| 35 | 74.475 | 36.76 | | |
| 36 | -143.471 | 3.18 | 1.72825 | 28.5 |
| 37 | -43.340 | 0.72 | | |
| 38 | 101.622 | 0.90 | 1.88300 | 40.8 |
| 39 | 20.211 | 6.72 | 1.51823 | 58.9 |
| 40 | 259.643 | 0.19 | | |
| 41 | 31.628 | 8.31 | 1.43875 | 94.7 |
| 42 | -32.043 | 0.90 | 2.00100 | 29.1 |
| 43 | -388.264 | 0.19 | | |
| 44 | 54.199 | 6.38 | 1.48749 | 70.2 |
| 45 | -38.068 | 4.00 | | |
| 46 | ∞ | 33.00 | 1.60859 | 46.4 |
| 47 | ∞ | 13.20 | 1.51633 | 64.1 |
| 48 | ∞ | 7.41 | | |
| image plane | ∞ | | | |

Aspheric Surface Data

First surface

K = -1.98597e+000 A4 = 6.95698e-007 A6 = 3.52367e-010 A8 = -8.66127e-013 A10 = 7.16222e-016 A12 = -2.38858e-019 A14 = 8.68177e-024 A16 = 6.98705e-027

Eighth surface

K = 1.99991e+000 A4 = 1.03732e-006 A6 = 3.19455e-011 A8 = -2.01815e-013 A10 = 3.41861e-016 A12 = -6.20324e-019 A14 = 5.09044e-022 A16 = -1.51973e-025

Eighteenth surface

K = 1.99997e+000 A4 = 1.63347e-005 A6 = -1.89426e-007 A8 = 4.35196e-009 A10 = -5.29639e-011 A12 = 2.78594e-013 A14 = -2.64644e-016 A16 = -1.55724e-018

Thirty-first surface

K = -1.60351e+000 A4 = -2.38072e-006 A6 = 9.65532e-010 A8 = -1.07429e-012

Various Types of Data

zoom ratio           19.61

| | wide | intermediate | telephoto |
|---|---|---|---|
| focal length | 5.10 | 20.00 | 100.01 |
| F-number | 1.80 | 1.80 | 3.00 |
| half angle of view | 47.16 | 15.38 | 3.15 |
| maximum image height | 5.50 | 5.50 | 5.50 |
| overall lens length | 318.53 | 318.53 | 318.53 |
| BF | 7.41 | 7.41 | 7.41 |
| d15 | 1.00 | 28.00 | 49.13 |
| d17 | 0.80 | 8.78 | 3.07 |
| d19 | 11.44 | 5.76 | 7.03 |
| d26 | 43.71 | 9.13 | 6.79 |
| d29 | 10.55 | 15.84 | 1.48 |
| d48 | 7.41 | 7.41 | 7.41 |

Zoom Lens Unit Data

| Unit | Starting surface | Focal length |
|---|---|---|
| 1 | 1 | 39.73 |
| 2 | 16 | -483.80 |
| 3 | 18 | -16.73 |
| 4 | 20 | -162.50 |
| 5 | 27 | -49.72 |
| 6 | 30 | 66.02 |

[Seventh Numerical Example]

Unit: mm

Surface Data

| Surface No. | r | d | nd | vd |
|---|---|---|---|---|
| 1* | 181.971 | 2.70 | 1.95375 | 32.3 |
| 2 | 37.082 | 23.27 | | |
| 3 | -187.565 | 2.10 | 1.95375 | 32.3 |
| 4 | -444.277 | 0.51 | | |
| 5 | 86.505 | 4.45 | 1.95906 | 17.5 |
| 6 | 162.361 | 2.01 | | |
| 7 | 112.318 | 8.01 | 1.49700 | 81.5 |
| 8* | -205.050 | 10.24 | | |
| 9 | 141.386 | 2.00 | 1.85478 | 24.8 |
| 10 | 50.624 | 16.17 | 1.43875 | 94.7 |
| 11 | -132.123 | 0.29 | | |
| 12 | 761.334 | 10.57 | 1.43387 | 95.1 |
| 13 | -64.407 | 0.29 | | |
| 14 | 62.614 | 8.83 | 1.76385 | 48.5 |
| 15 | 2021.406 | (variable) | | |
| 16* | 716.862 | 0.95 | 2.00330 | 28.3 |
| 17 | 14.584 | 3.47 | | |

(continued)

Unit: mm
Surface Data

| Surface No. | r | d | nd | vd |
|---|---|---|---|---|
| 18 | -111.675 | 0.95 | 2.00100 | 29.1 |
| 19 | 94.493 | 7.19 | 1.80810 | 22.8 |
| 20 | -10.625 | 0.70 | 1.88300 | 40.8 |
| 21 | 49.176 | 0.58 | | |
| 22 | 30.883 | 2.84 | 1.68893 | 31.1 |
| 23 | -994.674 | (variable) | | |
| 24 | -28.029 | 0.80 | 1.72916 | 54.7 |
| 25 | 33.928 | 3.03 | 1.85478 | 24.8 |
| 26 | 273.949 | (variable) | | |
| 27 (SP) | ∞ | 1.00 | | |
| 28* | 54.873 | 8.16 | 1.69930 | 51.1 |
| 29 | -55.291 | 0.20 | | |
| 30 | 51.676 | 7.49 | 1.60342 | 38.0 |
| 31 | -36.621 | 1.00 | 2.00100 | 29.1 |
| 32 | 2035.306 | (variable) | | |
| 33 | 120.250 | 3.79 | 1.74077 | 27.8 |
| 34 | -103.907 | 0.50 | | |
| 35 | 58.881 | 0.90 | 1.88300 | 40.8 |
| 36 | 19.423 | 5.47 | 1.51823 | 58.9 |
| 37 | 52.720 | 0.20 | | |
| 38 | 29.612 | 9.20 | 1.43875 | 94.7 |
| 39 | -27.448 | 0.90 | 2.00100 | 29.1 |
| 40 | -172.238 | 0.20 | | |
| 41 | 55.159 | 6.36 | 1.48749 | 70.2 |
| 42 | -37.903 | 4.00 | | |
| 43 | ∞ | 33.00 | 1.60859 | 46.4 |
| 44 | ∞ | 13.20 | 1.51633 | 64.1 |
| 45 | ∞ | 7.41 | | |
| image plane | ∞ | | | |

Aspheric Surface Data

First surface

K = -8.93981e-001 A4 = 9.80059e-007 A6 = 5.57228e-011 A8 = -8.22827e-013 A10 = 1.31415e-015 A12 = -9.59254e-019 A14 = 3.35597e-022 A16 = -4.57160e-026

Eighth surface

K = -7.00998e-001 A4 = 1.38151e-006 A6 = -1.20521e-010 A8 = -6.83395e-013 A10 = 1.23228e-015 A12 = -1.70014e-018 A14 = 1.31708e-021 A16 = -4.12156e-025

Sixteenth surface

K = -2.00000e+000 A4 = 1.77610e-005 A6 = -4.15523e-008 A8 = -1.80616e-009 A10 = 9.24431e-011 A12 = -1.82818e-012 A14 = 1.64148e-014 A16 = -5.49798e-017

Twenty-eighth surface

K = 1.50067e-001 A4 = -3.57782e-006 A6 = 3.25828e-009 A8 = -1.02852e-012

Various Types of Data

zoom ratio 18.00

| | wide | intermediate | telephoto |
|---|---|---|---|
| focal length | 5.30 | 20.00 | 95.42 |
| F-number | 1.90 | 1.90 | 2.98 |
| half angle of view | 46.06 | 15.38 | 3.30 |
| maximum image height | 5.50 | 5.50 | 5.50 |
| overall lens length | 303.53 | 303.53 | 303.53 |
| BF | 7.41 | 7.41 | 7.41 |
| d15 | 0.65 | 26.37 | 39.33 |
| d23 | 34.63 | 3.10 | 11.60 |
| d26 | 9.89 | 14.91 | 1.50 |
| d32 | 43.46 | 44.25 | 36.20 |
| d45 | 7.41 | 7.41 | 7.41 |

Zoom Lens Unit Data

| Unit | Starting surface | Focal length |
|---|---|---|
| 1 | 1 | 32.43 |
| 2 | 16 | -12.14 |
| 3 | 24 | -39.16 |
| 4 | 27 | 37.17 |
| 5 | 33 | 50.72 |

[Eighth Numerical Example]

Unit: mm

Surface Data

| Surface No. | r | d | nd | vd |
|---|---|---|---|---|
| 1* | 229.380 | 2.70 | 1.80100 | 35.0 |
| 2 | 36.617 | 24.99 | | |
| 3 | -119.806 | 2.10 | 1.80400 | 46.5 |
| 4 | 1331.791 | 0.15 | | |
| 5 | 89.954 | 4.42 | 1.92286 | 20.9 |
| 6 | 170.451 | 1.64 | | |
| 7 | 115.163 | 10.83 | 1.49700 | 81.5 |
| 8* | -121.734 | 6.88 | | |
| 9 | 114.069 | 2.00 | 1.78880 | 28.4 |
| 10 | 47.937 | 14.58 | 1.43875 | 94.7 |
| 11 | -911.200 | 0.32 | | |
| 12 | 223.511 | 12.34 | 1.43387 | 95.1 |
| 13 | -69.250 | 0.30 | | |
| 14 | 84.062 | 7.77 | 1.76385 | 48.5 |
| 15 | -1491.270 | (variable) | | |
| 16* | 61.743 | 0.95 | 2.00100 | 29.1 |
| 17 | 13.925 | 5.12 | | |
| 18 | -40.056 | 6.30 | 1.85896 | 22.7 |
| 19 | -11.540 | 0.70 | 1.88300 | 40.8 |

(continued)

Unit: mm
Surface Data

| Surface No. | r | d | nd | vd |
|---|---|---|---|---|
| 20 | 83.015 | 0.42 | | |
| 21 | 32.645 | 3.49 | 1.63980 | 34.5 |
| 22 | -134.091 | (variable) | | |
| 23 | -30.632 | 0.80 | 1.72916 | 54.7 |
| 24 | 43.584 | 2.93 | 1.85478 | 24.8 |
| 25 | 1000.423 | (variable) | | |
| 26 (SP) | ∞ | 1.00 | | |
| 27* | 99.614 | 7.18 | 1.59410 | 60.5 |
| 28 | -37.759 | 0.20 | | |
| 29 | 29.805 | 7.41 | 1.58144 | 40.8 |
| 30 | -155.646 | 1.00 | 1.95375 | 32.3 |
| 31 | 52.799 | 37.36 | | |
| 32 | -133.855 | 3.01 | 1.74077 | 27.8 |
| 33 | -44.787 | 0.50 | | |
| 34 | 3668.534 | 0.90 | 1.88300 | 40.8 |
| 35 | 29.523 | 5.90 | 1.51823 | 58.9 |
| 36 | -132.267 | 0.22 | | |
| 37 | 30.895 | 8.80 | 1.43875 | 94.7 |
| 38 | -32.052 | 0.90 | 2.00100 | 29.1 |
| 39 | -261.329 | 0.26 | | |
| 40 | 53.230 | 7.01 | 1.48749 | 70.2 |
| 41 | -63.387 | 4.00 | | |
| 42 | ∞ | 33.00 | 1.60859 | 46.4 |
| 43 | ∞ | 13.20 | 1.51633 | 64.1 |
| 44 | ∞ | 7.41 | | |
| image plane | ∞ | | | |

Aspheric Surface Data

First surface

K = -3.92174e-001 A4 = 7.64087e-007 A6 = 4.54215e-010 A8 = -1.18896e-012 A10 = 1.27042e-015 A12 = -6.66850e-019 A14 = 1.62286e-022 A16 = -1.36449e-026

Eighth surface

K = 9.63047e-001 A4 = 1.17487e-006 A6 = -2.01308e-011 A8 = -3.96359e-014 A10 = -7.57085e-018 A12 = -3.82724e-019 A14 = 5.30754e-022 A16 = -2.14961e-025

Sixteenth surface

K = -6.82023e-003 A4 = 3.79134e-006 A6 = -1.53320e-007 A8 = 3.82141e-009 A10 = -4.78731e-011 A12 = 2.39096e-013 A14 = 1.19993e-018 A16 = -2.44537e-018

Twenty-seventh surface

K = 1.89612e+000 A4 = -5.46391e-006 A6 = 2.04170e-009 A8 = -2.08254e-012

Various Types of Data

| zoom ratio | 19.20 | | |
|---|---|---|---|
| | wide | intermediate | telephoto |
| focal length | 5.20 | 20.00 | 99.85 |
| F-number | 1.89 | 1.89 | 3.10 |
| half angle of view | 46.60 | 15.38 | 3.15 |
| maximum image height | 5.50 | 5.50 | 5.50 |
| overall lens length | 313.53 | 313.53 | 313.53 |
| BF | 7.41 | 7.41 | 7.41 |
| d15 | 0.67 | 36.05 | 53.00 |
| d22 | 51.84 | 11.49 | 8.04 |
| d25 | 10.04 | 15.01 | 1.50 |
| d44 | 7.41 | 7.41 | 7.41 |

Zoom Lens Unit Data

| Unit | Starting surface | Focal length |
|---|---|---|
| 1 | 1 | 40.32 |
| 2 | 16 | -16.08 |
| 3 | 23 | -45.92 |
| 4 | 26 | 60.58 |

[Table 1]

| | | First example | Second example | Third example | Fourth example | Fifth example | Sixth example | Seventh example | Eighth example |
|---|---|---|---|---|---|---|---|---|---|
| Conditional expression (1) | LD1/f1 | 2.37 | 2.75 | 2.42 | 2.21 | 1.80 | 2.32 | 2.82 | 2.26 |
| Conditional expression (2) | ω | 47.73 | 47.16 | 47.05 | 48.88 | 46.06 | 47.16 | 46.06 | 46.60 |
| Conditional expression (3) | ft/fw | 20.00 | 19.61 | 19.50 | 18.75 | 18.87 | 19.61 | 18.00 | 19.20 |
| Conditional expression (4) | f1a/LD1 | -0.43 | -0.39 | -0.46 | -0.46 | -0.49 | -0.46 | -0.65 | -0.50 |

| | | | | | | | | | |
|---|---|---|---|---|---|---|---|---|---|
| Conditional expression (5) | f1c/LD1 | 0.62 | 0.57 | 0.54 | 0.65 | 0.73 | 0.58 | 0.53 | 0.63 |
| Conditional expression (6) | LD1/TL | 0.30 | 0.31 | 0.30 | 0.29 | 0.29 | 0.29 | 0.30 | 0.29 |
| Conditional expression (7) | f1/TL | 0.13 | 0.11 | 0.13 | 0.13 | 0.16 | 0.12 | 0.11 | 0.13 |
| Conditional expression (8) | nd1n | 2.35 | 2.27 | 2.27 | 2.35 | 2.36 | 2.36 | 2.44 | 2.35 |
| Conditional expression (9) | β1b | 2.84 | 3.28 | 1.59 | 2.46 | 2.49 | 2.17 | 2.80 | 2.62 |
| Conditional expression (10) | vd1ap | 20.88 | 17.47 | 28.43 | 20.36 | 18.90 | 20.36 | 17.47 | 20.88 |

| Conditional expression (11) | vd1cn | 28.43 | 24.80 | 40.76 | 30.05 | 28.43 | 28.43 | 24.80 | 28.43 |
|---|---|---|---|---|---|---|---|---|---|
| Conditional expression (12) | vd1cn - vd1ap | 7.55 | 7.33 | 12.33 | 9.69 | 9.53 | 8.07 | 7.33 | 7.55 |
| Conditional expression (13) | m/f1 | 1.35 | 1.33 | 1.32 | 1.41 | 0.98 | 1.27 | 1.19 | 1.30 |
| Conditional expression (14) | fG1/f1 | -1.35 | -1.78 | -1.52 | -1.11 | -1.20 | -1.52 | -1.51 | -1.35 |
| Conditional expression (15) | LD1a/LD1 | 0.37 | 0.39 | 0.37 | 0.37 | 0.38 | 0.38 | 0.36 | 0.38 |
| Conditional expression (16) | LD1b/LD1 | 0.13 | 0.14 | 0.15 | 0.11 | 0.12 | 0.13 | 0.09 | 0.12 |

| Conditional expression (17) | LD1c/LD1 | 0.41 | 0.38 | 0.38 | 0.42 | 0.37 | 0.41 | 0.42 | 0.41 |
|---|---|---|---|---|---|---|---|---|---|
| Conditional expression (18) | D1b/LD1 | 0.07 | 0.06 | 0.09 | 0.08 | 0.07 | 0.07 | 0.11 | 0.08 |
| Conditional expression (19) | fw/BFw | 0.087 | 0.089 | 0.089 | 0.083 | 0.092 | 0.089 | 0.092 | 0.090 |

[Table 2]

| | First example | Second example | Third example | Fourth example | Fifth example | Sixth example | Seventh example | Eighth example |
|---|---|---|---|---|---|---|---|---|
| LD1 | 95.28 | 98.64 | 95.53 | 89.37 | 89.73 | 92.13 | 91.44 | 91.01 |
| f1 | 40.28 | 35.84 | 39.50 | 40.44 | 49.92 | 39.73 | 32.43 | 40.32 |
| fw | 5.00 | 5.10 | 5.12 | 4.80 | 5.30 | 5.10 | 5.30 | 5.20 |
| ft | 100.00 | 100.00 | 99.84 | 90.02 | 100.00 | 100.01 | 95.42 | 99.85 |
| f1a | -41.35 | -38.51 | -44.41 | -41.42 | -44.19 | -41.95 | -59.19 | -45.52 |
| f1c | 59.20 | 55.95 | 51.62 | 58.41 | 65.47 | 53.41 | 48.77 | 56.95 |
| TL | 318.40 | 318.53 | 313.53 | 312.10 | 313.53 | 318.53 | 303.53 | 313.53 |
| nd1n | 2.35 | 2.27 | 2.27 | 2.35 | 2.36 | 2.36 | 2.44 | 2.35 |
| β1b | 2.84 | 3.28 | 1.59 | 2.46 | 2.49 | 2.17 | 2.80 | 2.62 |
| vd1ap | 20.88 | 17.47 | 28.43 | 20.36 | 18.90 | 20.36 | 17.47 | 20.88 |
| vd1cn | 28.43 | 24.80 | 40.76 | 30.05 | 28.43 | 28.43 | 24.80 | 28.43 |
| m | 54.23 | 47.75 | 51.94 | 57.16 | 48.69 | 50.40 | 38.68 | 52.34 |
| fG1 | -54.36 | -63.72 | -60.20 | -45.07 | -59.71 | -60.49 | -48.92 | -54.37 |
| LD1a | 35.54 | 38.66 | 35.64 | 33.25 | 34.51 | 34.58 | 33.03 | 34.36 |
| LD1b | 12.61 | 13.57 | 14.09 | 10.19 | 10.71 | 11.52 | 8.01 | 10.83 |
| LD1c | 38.78 | 37.69 | 36.15 | 37.60 | 33.56 | 37.98 | 38.14 | 37.31 |
| D1b | 6.35 | 5.65 | 8.64 | 6.71 | 6.64 | 6.43 | 10.24 | 6.88 |

| BFw | 57.61 | 57.61 | 57.61 | 57.61 | 57.61 | 57.61 | 57.61 | 57.61 |
|---|---|---|---|---|---|---|---|---|

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A zoom lens comprising, in order from an object side to an image side, a first lens unit (L1) having a positive refractive power and configured not to move for zooming, two or more intermediate lens units (LM) configured to move for zooming, and a rear lens unit (LN) having a positive refractive power,
   wherein a distance between each pair of adjacent lens units changes for zooming,
   wherein the first lens unit (L1) includes, in order from the object side to the image side, a first sub lens unit (1a) having a negative refractive power and configured not to move for focusing, a second sub lens unit (1b) having a positive refractive power and configured to move for focusing, and a third sub lens unit (1c) having a positive refractive power,
   wherein the following conditional expressions are satisfied:

$$1.5 \leq LD1/f1 \leq 3.0,$$

$$13 \le \mathrm{ft/fw} \le 28,$$

$$0.070 \le \mathrm{fw/BFw} \le 0.092,$$

and

$$-0.65 \le \mathrm{f1a/LD1} \le -0.30,$$

where f1 is a focal length of the first lens unit (L1), LD1 is a thickness of the first lens unit (L1) on an optical axis, fw is a focal length of the zoom lens at a wide angle end, ft is a focal length of the zoom lens at a telephoto end, BFw is a length, on the optical axis, from an image-side surface of a most image-side lens having a finite focal length in the zoom lens to an image plane, and f1a is a focal length of the first sub lens unit (1a).

2. The zoom lens according to claim 1, wherein a conditional expression

$$0.40 \le \mathrm{f1c/LD1} \le 1.0$$

is satisfied, where f1c is a focal length of the third sub lens unit (1c).

3. The zoom lens according to claim 1 or 2, wherein a conditional expression

$$0.25 \le \mathrm{LD1/TL} \le 0.35$$

is satisfied, where TL is a distance, on the optical axis, from a most object-side lens surface of the zoom lens to the image plane.

4. The zoom lens according to any one of claims 1 to 3, wherein a conditional expression

$$0.10 \le \mathrm{f1/TL} \le 0.20$$

is satisfied, where TL is a distance, on the optical axis, from a most object-side lens surface of the zoom lens to the image plane.

5. The zoom lens according to any one of claims 1 to 4, wherein a conditional expression

$$1.75 \le \mathrm{nd1n} \le 2.00$$

is satisfied, where nd1n is an average refractive index on d-line of one or more negative lenses in the first lens unit (L1).

6. The zoom lens according to any one of claims 1 to 5, wherein a conditional expression

$$1.2 \le \beta 1b \le 4.0$$

is satisfied, where $\beta 1b$ is a lateral magnification of the second sub lens unit (1b) at the wide angle end and an infinity focusing state.

7. The zoom lens according to claim 6, wherein the second sub lens unit (1b) includes a positive lens having at least one aspheric surface.

8. The zoom lens according to any one of claims 1 to 7, wherein the first sub lens (1a) unit includes a lens 1ap having a positive refractive power, and a conditional expression

$$17.0 \leq vd1ap \leq 35.0$$

is satisfied, where vd1ap is an Abbe number on d-line of the lens 1ap.

9. The zoom lens according to any one of claims 1 to 8, wherein the third sub lens (1c) unit includes a lens 1cn having a negative refractive power, and a conditional expression

$$20.0 \leq vd1cn < 50.0$$

is satisfied, where vd1cn is an Abbe number on d-line of the lens 1cn.

10. The zoom lens according to any one of claims 1 to 9, wherein the first sub lens unit (1a) includes a lens 1ap having a positive refractive power, the third sub lens unit (1c) includes a lens 1cn having a negative refractive power, and a conditional expression

$$5.0 \leq vd1cn - vd1ap \leq 20.0$$

is satisfied, where vd1ap is an Abbe number on d-line of the lens 1ap and vd1cn is an Abbe number on d-line of the lens 1cn.

11. The zoom lens according to any one of claim 1 to 10, wherein the two or more intermediate lens units (LM) include a lens unit having a negative refractive power and satisfying a conditional expression

$$0.70 \leq m/f1 \leq 2.0,$$

where m is an amount of movement of the lens unit from the wide angle end to the telephoto end.

12. The zoom lens according to any one of claims 1 to 11, wherein the first lens unit (L1) includes a lens G1 having a negative refractive power as a most object-side lens, and a conditional expression

$$-2.2 \leq fG1/f1 \leq -0.8$$

is satisfied, where fG1 is a focal length of the lens G1.

13. The zoom lens according to any one of claims 1 to 12, wherein a conditional expression

$$0.30 \leq LD1a/LD1 \leq 0.50$$

is satisfied, where LD1a is a thickness of the first sub lens unit (1a) on the optical axis.

14. The zoom lens according to any one of claims 1 to 13, wherein a conditional expression

$$0.05 \leq LD1b/LD1 \leq 0.20$$

is satisfied, where LD1b is a thickness of the second sub lens unit (1b) on the optical axis.

15. The zoom lens according to any one of claim 1 to 14, wherein a conditional expression

$$0.30 \leq LD1c/LD1 \leq 0.50$$

is satisfied, where LDlc is a thickness of the third sub lens unit (1c) on the optical axis.

16. The zoom lens according to any one of claim 1 to 15, wherein a conditional expression

$$0.05 \leq D1b/LD1 \leq 0.20$$

is satisfied, where D1b is a distance between the second sub lens unit (1b) and the third sub lens unit (1c)at an infinity focusing state.

17. The zoom lens according to any one of claims 1 to 16, wherein the two or more intermediate lens units (LM) include, in order from the object side to the image side, a first intermediate lens unit (M1) having a negative refractive power, a second intermediate lens unit (M2) having a negative refractive power, and a third intermediate lens unit (M3) having a positive refractive power.

18. The zoom lens according to any one of claims 1 to 17, wherein the two or more intermediate lens units (LM) include, in order from the object side to the image side, a first intermediate lens unit (M1) having a positive refractive power, a second intermediate lens unit (M2) having a negative refractive power, and a third intermediate lens unit (M3) having a negative refractive power.

19. The zoom lens according to any one of claims 1 to 18, wherein the two or more intermediate lens units (LM) include, in order from the object side to the image side, a first intermediate lens unit (M1) having a negative refractive power, a second intermediate lens unit (M2) having a negative refractive power, a third intermediate lens unit (M3) having a negative refractive power, and a fourth intermediate lens unit (M4) having a negative refractive power.

20. The zoom lens according to any one of claims 1 to 19, wherein the two or more intermediate lens units (LM) include, in order from the object side to the image side, a first intermediate lens unit (M1) having a negative refractive power, and a second intermediate lens unit (M2) having a negative refractive power.

21. A zoom lens for a camera having a diagonal image size of 2Y, the zoom lens comprising, in order from an object side to an image side, a first lens unit (L1) having a positive refractive power and configured not to move for zooming, two or more intermediate lens units (LM) configured to move for zooming, and a rear lens unit (LN) having a positive refractive power,
wherein a distances between each pair of adjacent lens units changes for zooming,
wherein the first lens unit (L1) includes, in order from the object side to the image side, a first sub lens unit (1a) having a negative refractive power and configured not to move for focusing, a second sub lens unit (1b) having a positive refractive power and configured to move for focusing, and a third sub lens unit (1c) having a positive refractive power, and
wherein the following conditional expressions are satisfied:

$$1.5 \leq LD1/f1 \leq 3.0,$$

$$46^{\circ} \leq \omega \leq 50^{\circ},$$

and

$$13 \leq ft/fw \leq 28,$$

where f1 is a focal length of the first lens unit (L1), LD1 is a thickness of the first lens unit (L1) on an optical axis, $\omega$ is a half angle of view of the zoom lens at a wide angle end, fw is a focal length of the zoom lens at the wide angle end, and ft is a focal length of the zoom lens at a telephoto end, and the half angle of view $\omega$ is defined by an equation

$$\omega = \arctan(Y/fw).$$

**22.** The zoom lens according to claim 21, wherein the diagonal image size is 11.00 mm.

**23.** An image pickup apparatus (125) comprising:

the zoom lens (101) according to any one of claims 1 to 22; and
an image pickup element (110) configured to pick up an image formed by the zoom lens (101).

# FIG.1

FIG.2A

Fno = 1.8 | ω = 47.7° | ω = 47.7° | ω = 47.7°

M – – –  S ——
e ——  C —··—
g —···—  F – – –

-0.200    0.200
SPHERICAL
ABERRATION

-0.200    0.200
ASTIGMATISM

-5.000    5.000
DISTORTION (%)

-0.050    0.050
CHROMATIC
ABERRATION

FIG.2B

Fno = 1.8 | ω = 12.4° | ω = 12.4° | ω = 12.4°

M – – –  S ——
e ——  C —·—
g —···—  F – – –

-0.200    0.200
SPHERICAL
ABERRATION

-0.200    0.200
ASTIGMATISM

-5.000    5.000
DISTORTION (%)

-0.050    0.050
CHROMATIC
ABERRATION

FIG.2C

Fno = 2.95 | ω = 3.15° | ω = 3.15° | ω = 3.15°

M – – –  S ——
e ——  C —·—
g —···—  F – – –

-0.200    0.200
SPHERICAL
ABERRATION

-0.200    0.200
ASTIGMATISM

-5.000    5.000
DISTORTION (%)

-0.050    0.050
CHROMATIC
ABERRATION

# FIG.3

## FIG.4A

M – – – S ———
e ——— C —·—
g —··— F – – –

Fno = 1.9    ω = 47.2°    ω = 47.2°    ω = 47.2°

-0.200    0.200
SPHERICAL
ABERRATION

-0.200    0.200
ASTIGMATISM

-5.000    5.000
DISTORTION (%)

-0.050    0.050
CHROMATIC
ABERRATION

## FIG.4B

M – – – S ———
e ——— C —·—
g —··— F – – –

Fno = 1.89    ω = 12.4°    ω = 12.4°    ω = 12.4°

-0.200    0.200
SPHERICAL
ABERRATION

-0.200    0.200
ASTIGMATISM

-5.000    5.000
DISTORTION (%)

-0.050    0.050
CHROMATIC
ABERRATION

## FIG.4C

M – – – S ———
e ——— C —·—
g —··— F – – –

Fno = 3.1    ω = 3.15°    ω = 3.15°    ω = 3.15°

-0.200    0.200
SPHERICAL
ABERRATION

-0.200    0.200
ASTIGMATISM

-5.000    5.000
DISTORTION (%)

-0.050    0.050
CHROMATIC
ABERRATION

EP 3 933 477 A1

# FIG.5

45

**FIG.6A**

Fno = 1.9 | ω = 47° | ω = 47° | ω = 47°

M – – – S ——— | e ——— C — · —
g — · · — F – – –

-0.200   0.200
SPHERICAL
ABERRATION

-0.200   0.200
ASTIGMATISM

-5.000   5.000
DISTORTION (%)

-0.050   0.050
CHROMATIC
ABERRATION

**FIG.6B**

Fno = 1.9 | ω = 15.4° | ω = 15.4° | ω = 15.4°

M – – – S ——— | e ——— C — · —
g — · · — F – – –

-0.200   0.200
SPHERICAL
ABERRATION

-0.200   0.200
ASTIGMATISM

-5.000   5.000
DISTORTION (%)

-0.050   0.050
CHROMATIC
ABERRATION

**FIG.6C**

Fno = 3.1 | ω = 3.15° | ω = 3.15° | ω = 3.15°

M – – – S ——— | e ——— C — · —
g — · · — F – – –

-0.200   0.200
SPHERICAL
ABERRATION

-0.200   0.200
ASTIGMATISM

-5.000   5.000
DISTORTION (%)

-0.050   0.050
CHROMATIC
ABERRATION

# FIG.7

## FIG.8A

M ─ ─ ─ S ───────
e ───── C ─ · ─
g ─ · · · F ─ ─ ─

Fno = 1.9     ω = 48.9°     ω = 48.9°     ω = 48.9°

-0.200   0.200   -0.200   0.200   -5.000   5.000   -0.050   0.050

SPHERICAL ABERRATION    ASTIGMATISM    DISTORTION (%)    CHROMATIC ABERRATION

## FIG.8B

M ─ ─ ─ S ───────
e ───── C ─ · ─
g ─ · · · F ─ ─ ─

Fno = 1.9     ω = 15.4°     ω = 15.4°     ω = 15.4°

-0.200   0.200   -0.200   0.200   -5.000   5.000   -0.050   0.050

SPHERICAL ABERRATION    ASTIGMATISM    DISTORTION (%)    CHROMATIC ABERRATION

## FIG.8C

M ─ ─ ─ S ───────
e ───── C ─ · ─
g ─ · · · F ─ ─ ─

Fno = 2.92     ω = 3.5°     ω = 3.5°     ω = 3.5°

-0.200   0.200   -0.200   0.200   -5.000   5.000   -0.050   0.050

SPHERICAL ABERRATION    ASTIGMATISM    DISTORTION (%)    CHROMATIC ABERRATION

# FIG.9

## FIG.10A

## FIG.10B

## FIG.10C

# FIG.11

FIG.12A

FIG.12B

FIG.12C

# FIG.13

## FIG.14A

Fno = 1.9   ω = 46.1°   ω = 46.1°   ω = 46.1°

M – – – S ——   e —— C —·—
                g —··— F — — —

-0.200  0.200   -0.200  0.200   -5.000  5.000   -0.050  0.050
SPHERICAL       ASTIGMATISM     DISTORTION (%)   CHROMATIC
ABERRATION                                        ABERRATION

## FIG.14B

Fno = 1.9   ω = 15.4°   ω = 15.4°   ω = 15.4°

M – – – S ——   e —— C —·—
                g —··— F — — —

-0.200  0.200   -0.200  0.200   -5.000  5.000   -0.050  0.050
SPHERICAL       ASTIGMATISM     DISTORTION (%)   CHROMATIC
ABERRATION                                        ABERRATION

## FIG.14C

Fno = 2.98   ω = 3.3°   ω = 3.3°   ω = 3.3°

M – – – S ——   e —— C —·—
                g —··— F — — —

-0.200  0.200   -0.200  0.200   -5.000  5.000   -0.050  0.050
SPHERICAL       ASTIGMATISM     DISTORTION (%)   CHROMATIC
ABERRATION                                        ABERRATION

# FIG.15

FIG.16A

Fno = 1.89

-0.200    0.200
SPHERICAL
ABERRATION

M – – – S ——

ω = 46.6°

-0.200    0.200
ASTIGMATISM

e —— C —·—
g —··— F – – –

ω = 46.6°

-5.000    5.000
DISTORTION (%)

ω = 46.6°

-0.050    0.050
CHROMATIC
ABERRATION

FIG.16B

Fno = 1.89

-0.200    0.200
SPHERICAL
ABERRATION

M – – – S ——

ω = 15.4°

-0.200    0.200
ASTIGMATISM

e —— C —·—
g —··— F – – –

ω = 15.4°

-5.000    5.000
DISTORTION (%)

ω = 15.4°

-0.050    0.050
CHROMATIC
ABERRATION

FIG.16C

Fno = 3.1

-0.200    0.200
SPHERICAL
ABERRATION

M – – – S ——

ω = 3.15°

-0.200    0.200
ASTIGMATISM

e —— C —·—
g —··— F – – –

ω = 3.15°

-5.000    5.000
DISTORTION (%)

ω = 3.15°

-0.050    0.050
CHROMATIC
ABERRATION

# FIG.17

# FIG.18

Europäisches
Patentamt

European
Patent Office

Office européen
des brevets

# EUROPEAN SEARCH REPORT

**Application Number**

EP 21 18 1605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/131164 A1 (WAKAZONO TSUYOSHI [JP] ET AL) 14 May 2015 (2015-05-14) * figures 1,3,5 * | 1-23 | INV. G02B15/14 G02B15/167 G02B15/20 |
| X | WO 2017/130480 A1 (FUJIFILM CORP [JP]) 3 August 2017 (2017-08-03) * figure 6 * | 1-23 | |
| X | US 2015/130968 A1 (SHIMOMURA KAZUYA [JP] ET AL) 14 May 2015 (2015-05-14) * figure 9 * | 1-23 | |

**TECHNICAL FIELDS
SEARCHED      (IPC)**

G02B

The present search report has been drawn up for all claims

| Place of search | Date of completion of the search | Examiner |
|---|---|---|
| Munich | 9 November 2021 | Daffner, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 18 1605

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2021

| Patent document cited in search report | Publication date | Patent family member(s) | Publication date |
|---|---|---|---|
| US 2015131164 A1 | 14-05-2015 | JP 2015094867 A<br>US 2015131164 A1 | 18-05-2015<br>14-05-2015 |
| WO 2017130480 A1 | 03-08-2017 | CN 108700729 A<br>JP 6411679 B2<br>JP WO2017130480 A1<br>US 2018299643 A1<br>WO 2017130480 A1 | 23-10-2018<br>24-10-2018<br>27-09-2018<br>18-10-2018<br>03-08-2017 |
| US 2015130968 A1 | 14-05-2015 | EP 2871510 A1<br>JP 6251009 B2<br>JP 2015094864 A<br>US 2015130968 A1 | 13-05-2015<br>20-12-2017<br>18-05-2015<br>14-05-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017158899 A